# EUROPEAN PATENT APPLICATION

(11) **EP 4 835 657 A1**
(43) Date of publication of application: **04.11.2026**
(21) Application number: 25893682.2
(22) Date of filing: 28.08.2025
(51) Int. Cl.: G06F 9/451, G06F 3/04883, G06F 3/0484

(54) **SIDEBAR DISPLAY METHOD AND ELECTRONIC DEVICE**

(30) Priority: 20.11.2024 CN 202411674265
(71) Applicant: Huawei Technologies Co., Ltd., Shenzhen, Guangdong 518129 (CN)
(72) Inventor: ZHANG, Zhenning, Shenzhen, Guangdong 518129 (CN)
(74) Representative: Epping - Hermann - Fischer
(86) International application number: PCT/CN2025/117512
(87) International publication number: WO 2026/108297

(57) **Abstract**

This application provides a sidebar display method and an electronic device, which relate to the field of terminal technologies, so that a user can be more intuitively prompted, through a status change of an interface element, when a finger can be lifted to pull out a sidebar. This increases a success rate of pulling out the sidebar, and provides better use experience for the user. In the method, in response to a first slide gesture, the electronic device displays a first interface element in a first state, where the first state indicates a state in which the first interface element changes from being small to being large. Then, in a process in which the first slide gesture continues to slide, the electronic device displays the first interface element and a second interface element, where the first interface element and the second interface element are in a state of being mutually independent. Finally, in response to an operation of ending the first slide gesture, the electronic device stops displaying the second interface element, and displays the sidebar.

## Description

This application claims priority to Chinese Patent Application No. 202411674265.X, filed with the China National Intellectual Property Administration on November 20, 2024 and entitled "SIDEBAR DISPLAY METHOD AND ELECTRONIC DEVICE", which is incorporated herein by reference in its entirety.

### TECHNICAL FIELD

This application relates to the field of terminal technologies, and in particular, to a sidebar display method and an electronic device.

### BACKGROUND

Currently, to help a user find a frequently used application on an electronic device, the electronic device usually provides a sidebar for the user, and displays, in the sidebar, some applications frequently used by the user. However, the sidebar can be pulled out only when a specific condition is met. In an actual operation process, the user is prone to an accidental touch or an insensitive operation. This reduces a success rate of pulling out the sidebar, and affects user experience.

### SUMMARY

This application provides a sidebar display method and an electronic device, to increase a success rate of pulling out a sidebar.

To achieve the foregoing objectives, the following technical solutions are used in embodiments of this application.

According to a first aspect, a sidebar display method is provided. An example in which the method is applied to an electronic device is used. In response to a first slide gesture, the electronic device displays a first interface element in a first state, where the first state indicates a state in which the first interface element changes from being small to being large. In a process in which the first slide gesture continues to slide, the electronic device displays the first interface element and a second interface element, where the first interface element and the second interface element are in a state of being mutually independent. In response to an operation of ending the first slide gesture, the electronic device stops displaying the second interface element, and displays a sidebar.

In the foregoing method, as a slide gesture moves, an interface element displayed on the electronic device also changes, from displaying the first interface element to displaying the first interface element and the second interface element, and the first interface element and the second interface element are mutually independent, to prompt that the sidebar can be pulled out. After the slide gesture ends, the electronic device displays the sidebar, and does not continue to display the second interface element. The electronic device can better prompt a user through the change of the interface element. The process of displaying the interface element is more intuitive. A change of a status of the interface element enables the user to know when a finger can be lifted to pull out the sidebar. This increases a success rate of pulling out the sidebar, and provides better use experience for the user.

In addition, before a gesture of the user is not received, the sidebar is hidden on one side of a screen, which can also reduce problems of an accidental touch by the user and affecting display aesthetics that are caused because the sidebar is resident on the screen.

In addition, after the user executes the slide gesture, a triggered change of the status of the interface element is obvious. If an original intention of the user is not to pull out the sidebar, the change of the status can also intuitively remind the user, which enables the user to cancel the slide gesture in a timely manner, change the sidebar to be in a state in which the sidebar may not be pulled out, or the like. This can also reduce a probability of accidentally touching the sidebar.

In a feasible implementation of the first aspect, that the electronic device displays the first interface element in the first state includes: The first interface element is extended from a first side edge of the screen. In another feasible implementation of the first aspect, a touch point of the first slide gesture on the screen slides from the first side edge of the screen in a first direction. In still another feasible implementation of the first aspect, in the process in which the first slide gesture continues to slide, a position of the second interface element moves following the touch point of the first slide gesture on the screen.

In the foregoing implementation, a side on which the first slide gesture starts is a side on which the first interface element is extended, and the first interface element changes from being small to being large. This provides more intuitive experience for the user. A change of the position of the second interface element is obvious, and can more intuitively prompt the user of the change of the interface element. The second interface element is independent of the first interface element, which may indicate that the sidebar is in a state in which the sidebar can be pulled out, or indicate that the slide gesture meets a condition. In this way, the user can clearly know, based on the status of the element, when the finger can be lifted to successfully pull out the sidebar.

In a feasible implementation of the first aspect, before displaying the first interface element and the second interface element, the electronic device further displays the first interface element and the second interface element that are in a second state, where the second state indicates that the first interface element is attached to the second interface element.

In the foregoing implementation, the change of the status of the first interface element may prompt the user of a change of a position of the slide gesture. In the second state, the sidebar may alternatively be in the state in which the sidebar cannot be pulled out.

In a feasible implementation of the first aspect, if a distance between the second interface element and the first interface element does not reach a preset distance or before the second interface element is not detached from the first interface element, the electronic device displays the second interface element in a first display manner. If the distance between the second interface element and the first interface element reaches the preset distance, the electronic device displays the second interface element in a second display manner.

For example, the first display manner includes an arrow indicator, and the second display manner includes a circular indicator.

In the foregoing implementation, for the user, the user may not know how much distance the slide gesture needs to move to successfully pull out the sidebar. However, through a change of a display manner of the second interface element, the user can clearly and intuitively learn that the slide gesture meets a specific condition or requirement, and in this case, the sidebar can be successfully pulled out.

In a feasible implementation of the first aspect, in the process in which the first slide gesture continues to slide, the electronic device displays an edge of the sidebar on the first side edge of the screen.

In the foregoing implementation, the edge of the sidebar may be displayed to indicate that the sidebar is in the state in which the sidebar can be pulled out. This provides intuitive visual experience for the user.

In a feasible implementation of the first aspect, in the process in which the first slide gesture continues to slide, the first interface element gradually becomes small and disappears.

In the foregoing implementation, the first interface element gradually becomes small and disappears. Visually, this can also allow the user to more intuitively feel the change of the interface element.

In a feasible implementation of the first aspect, before the first slide gesture ends, the second interface element is displayed in the second display manner. In this way, the user may be prompted that the sidebar is in the state in which the sidebar can be pulled out. In this case, if the user lifts the finger, the sidebar can be pulled out.

In a feasible implementation of the first aspect, in the process in which the first slide gesture continues to slide, the method further includes: in a process in which the touch point of the first slide gesture on the screen slides from the screen in the first direction, updating the second interface element from the first display manner to the second display manner; and/or in a process in which the touch point of the first slide gesture on the screen slides from the screen in a second direction, updating the second interface element from the second display manner to the first display manner. In the foregoing implementation, the position of the second interface element moves following the touch point, and during movement in the first direction, the display manner of the second interface element is the second display manner, to prompt that the sidebar can be pulled out. During movement in the second direction, the display manner of the second interface element is the first display manner, to prompt that the sidebar cannot be pulled out.

In a feasible implementation of the first aspect, in the process in which the first slide gesture continues to slide, the method further includes: in the process in which the touch point of the first slide gesture on the screen slides from the screen in the first direction, displaying the first interface element and the second interface element that are in the second state; and
in the process in which the touch point of the first slide gesture on the screen slides from the screen in the second direction, displaying the first interface element in a third state, where the third state indicates a state in which the first interface element changes from being large to being small.

In the foregoing implementation, when the touch point moves in the first direction, the first interface element and the second interface element that are attached to each other are displayed. When the touch point moves in the second direction, the first interface element gradually becomes small. In this way, a slide direction of the touch point is prompted through the change of the interface element.

In a feasible implementation of the first aspect, the first interface element is in a shape of an arc, and the second interface element is in a shape of a circle.

In the foregoing implementation, the first interface element is in the shape of an arc, and the second interface element is in the shape of a circle. This can make a detachment process smoother, make the change of the status of the interface element more intuitive, and also help provide a prompt of the change of the status for the user.

In a feasible implementation of the first aspect, the sidebar includes a first area and a second area. The first area includes at least one application icon. The at least one application icon in the first area includes an icon that corresponds to a preset application and/or an icon that corresponds to an application recommended by a system. The second area includes an application icon of a locked application.

In the foregoing implementation, functions of the areas are different. After the locked application is started, the user is prompted to enter a password. The user is allowed to use the application only when the password is successfully verified. This can better protect user privacy, and improve application security.

In a feasible implementation of the first aspect, in response to an operation of expanding the sidebar by the user, the electronic device displays a first page, where the first page includes at least one application icon. Then, in response to an operation of selecting an application icon by the user, the electronic device adds the application icon selected by the user to the second area.

In the foregoing implementation, an application corresponding to the application icon selected by the user may be locked, which better protects user privacy.

According to a second aspect, an electronic device is provided, including a memory and one or more processors. The memory is coupled to the processor, the memory stores computer program code, and the computer program code includes computer instructions. When the computer instructions are executed by the processor, the electronic device is enabled to perform the sidebar display method according to the first aspect and any feasible implementation of the first aspect.

According to a third aspect, a computer-readable storage medium is provided, including computer instructions. When the computer instructions are run on an electronic device, the electronic device is enabled to perform the sidebar display method according to the first aspect and any feasible implementation of the first aspect.

According to a fourth aspect, a computer program product is provided. When the computer program product runs on a computer, the computer is enabled to perform the sidebar display method according to the first aspect and any feasible implementation of the first aspect.

For beneficial effects that can be achieved by the electronic device provided in the second aspect, the computer-readable storage medium provided in the third aspect, and the computer program product provided in the fourth aspect, refer to beneficial effects that can be achieved in the first aspect and any feasible implementation of the first aspect. Details are not described herein again.

### BRIEF DESCRIPTION OF DRAWINGS

FIG. 1(a) and FIG. 1(b) show a method for displaying a sidebar in some examples according to an embodiment of this application;
FIG. 2 is a diagram 1 of a structure of an electronic device according to an embodiment of this application;
FIG. 3(a)-1, FIG. 3(a)-2, FIG. 3(b), and FIG. 3(c) are a diagram 1 of a status of a first interface element according to an embodiment of this application;

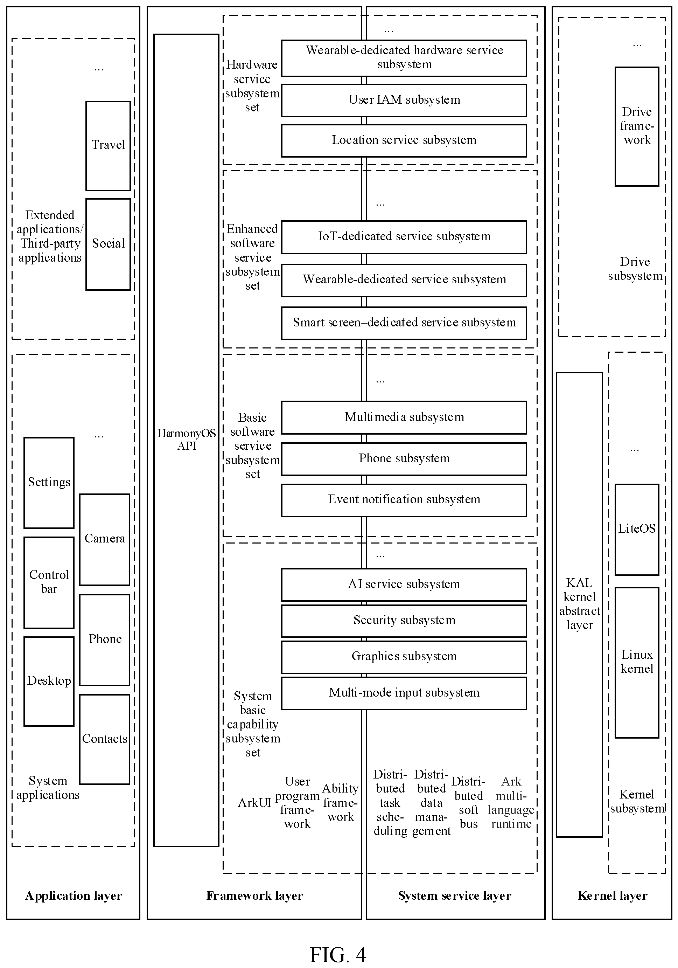

FIG. 4 is a diagram 2 of a structure of an electronic device according to an embodiment of this application;

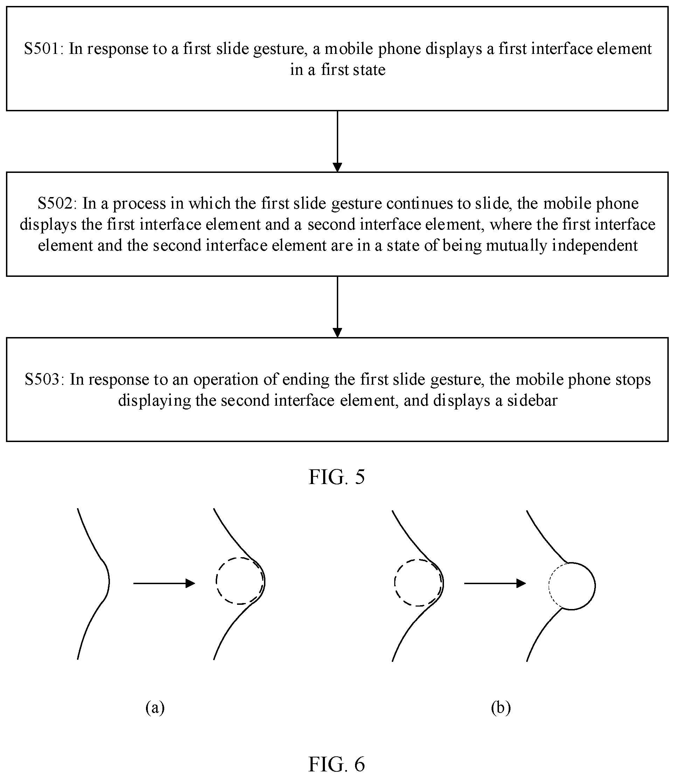

FIG. 5 is a schematic flowchart 1 of a sidebar display method according to an embodiment of this application;
FIG. 6 is a diagram 2 of a status of a first interface element according to an embodiment of this application;

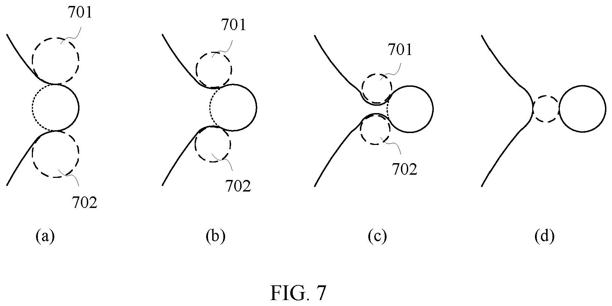

FIG. 7 is a diagram of a process in which a second interface element is detached from a first interface element according to an embodiment of this application;

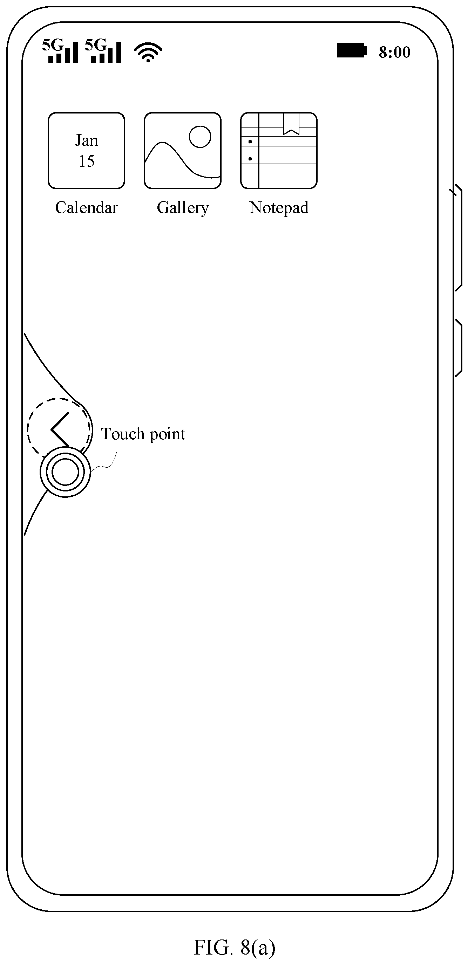

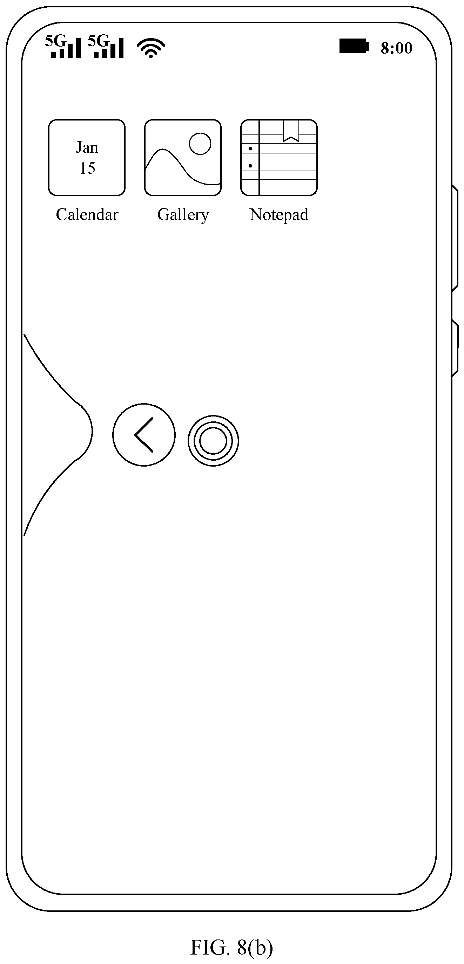

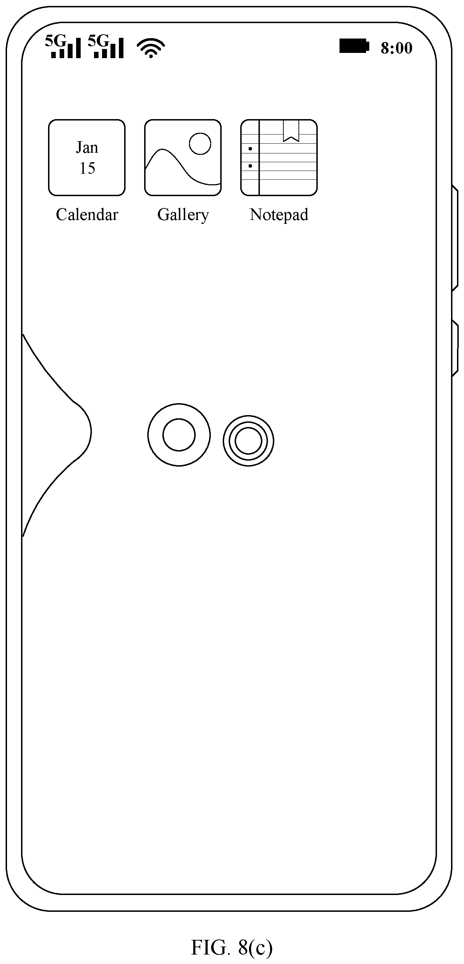

FIG. 8(a), FIG. 8(b), and FIG. 8(c) are diagrams of a second interface element in different display manners according to an embodiment of this application;

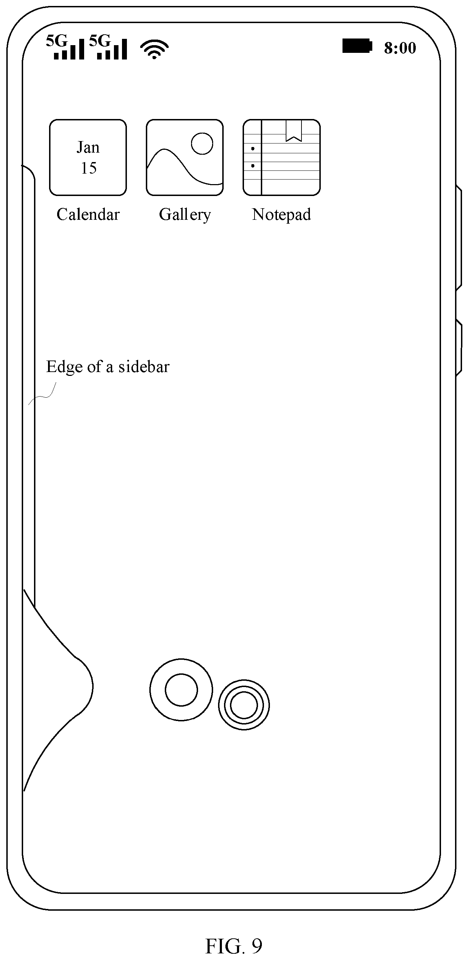

FIG. 9 is a diagram of a sidebar in a state in which the sidebar can be pulled out according to an embodiment of this application;

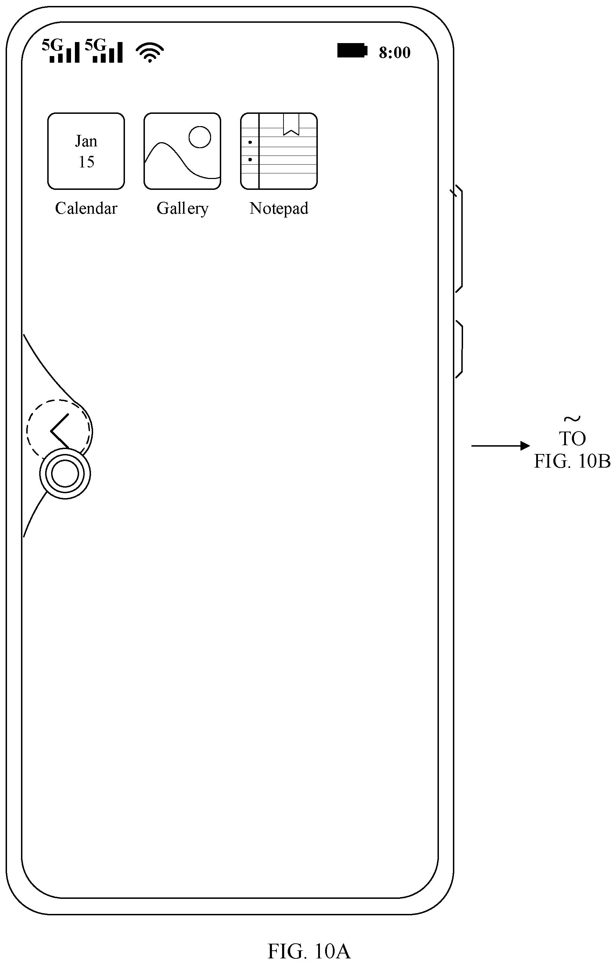

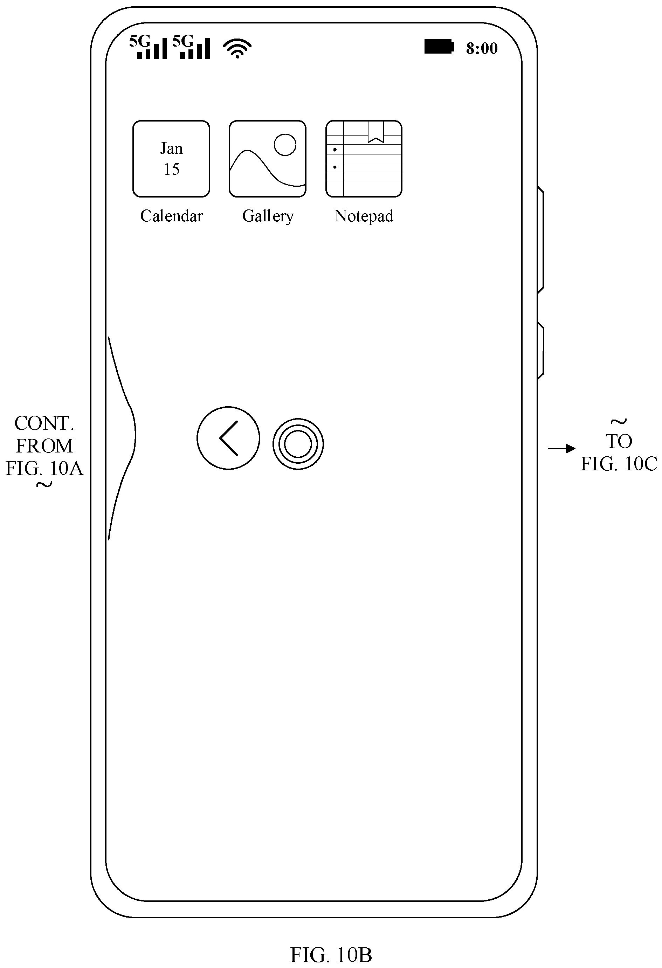

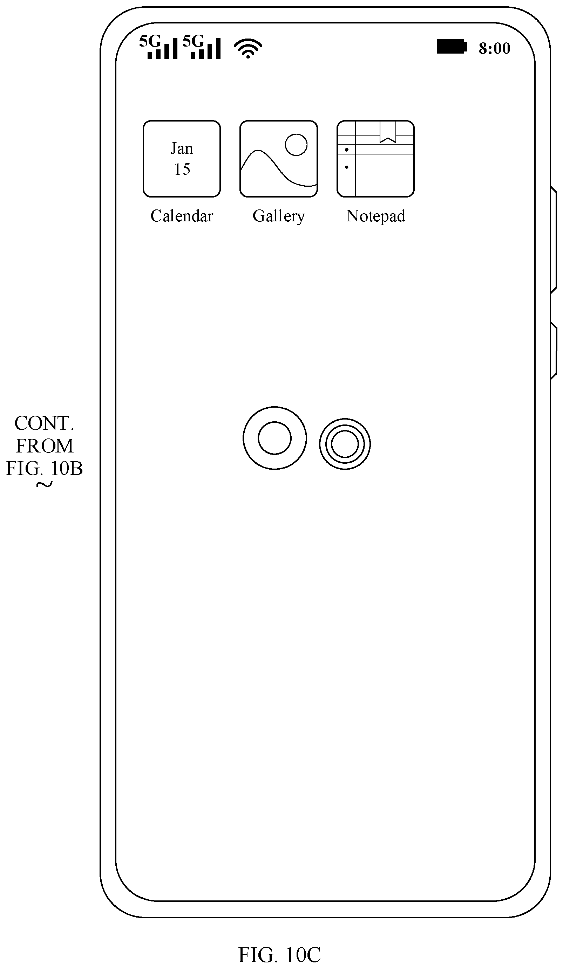

FIG. 10A, FIG. 10B, and FIG. 10C are diagrams of a change of a status of a first interface element according to an embodiment of this application;

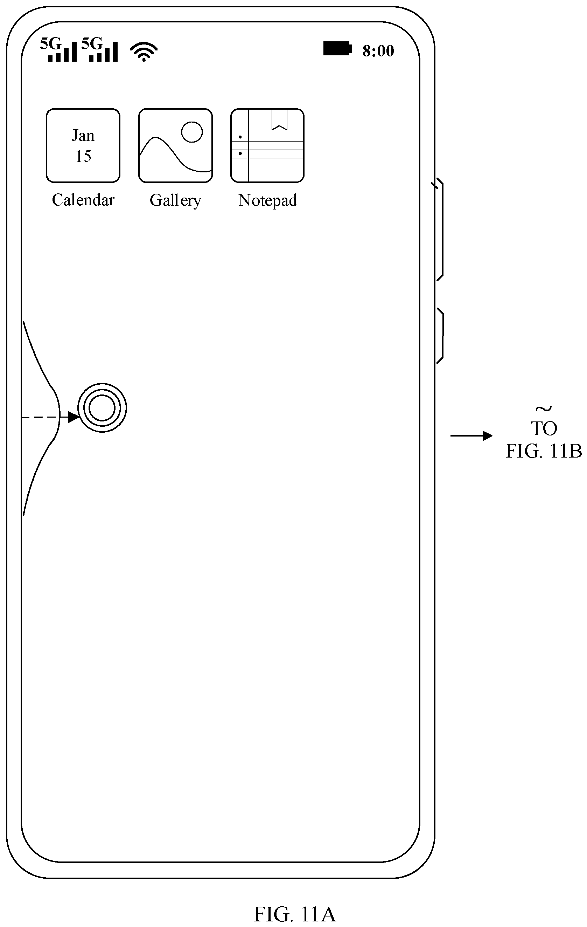

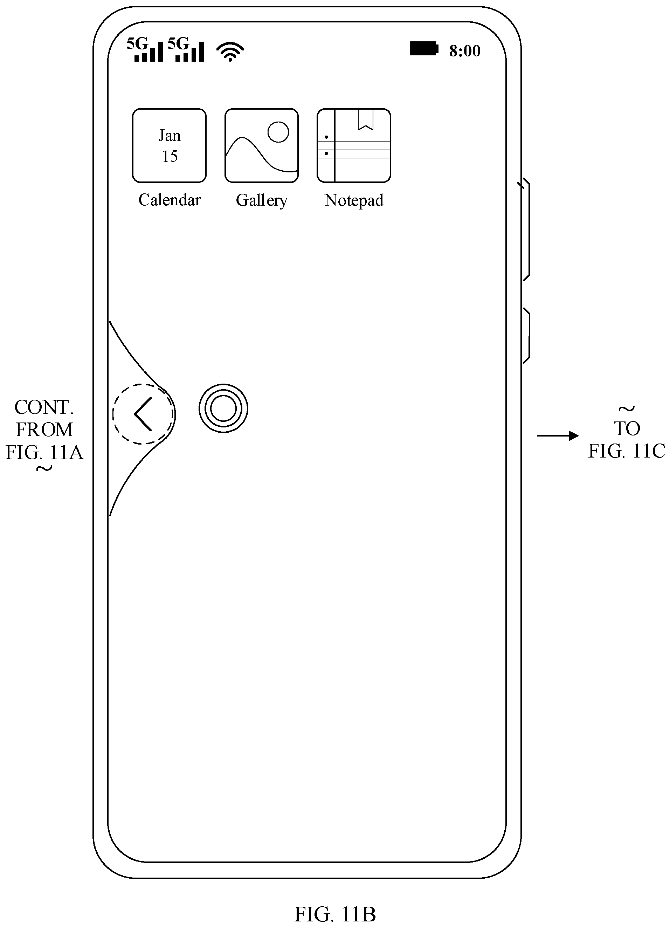

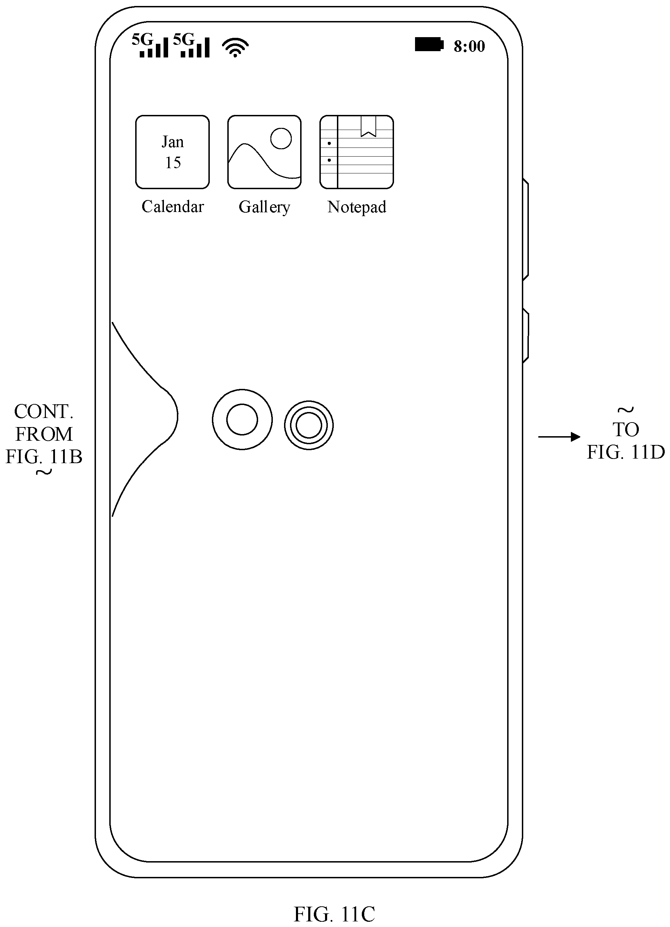

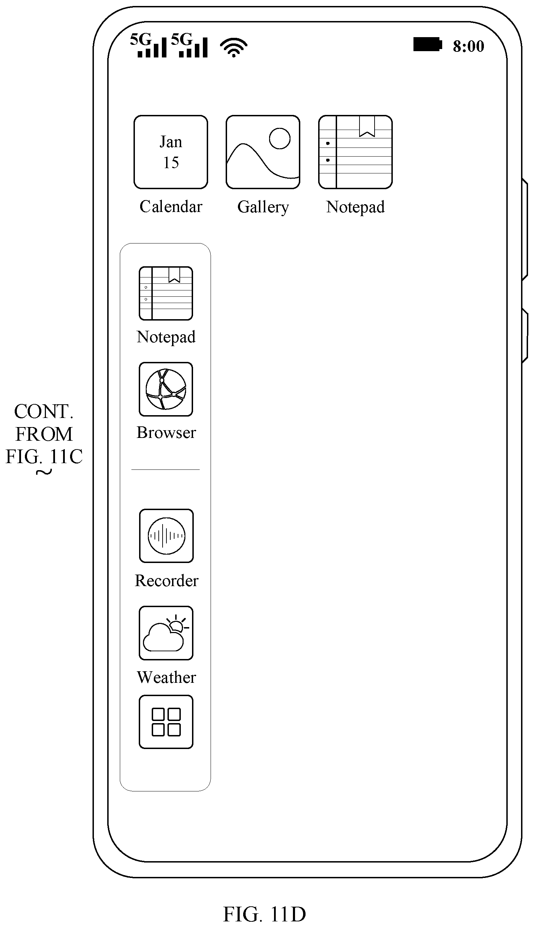

FIG. 11A, FIG. 11B, FIG. 11C, and FIG. 11D are diagrams of a change of a mobile phone interface according to an embodiment of this application;

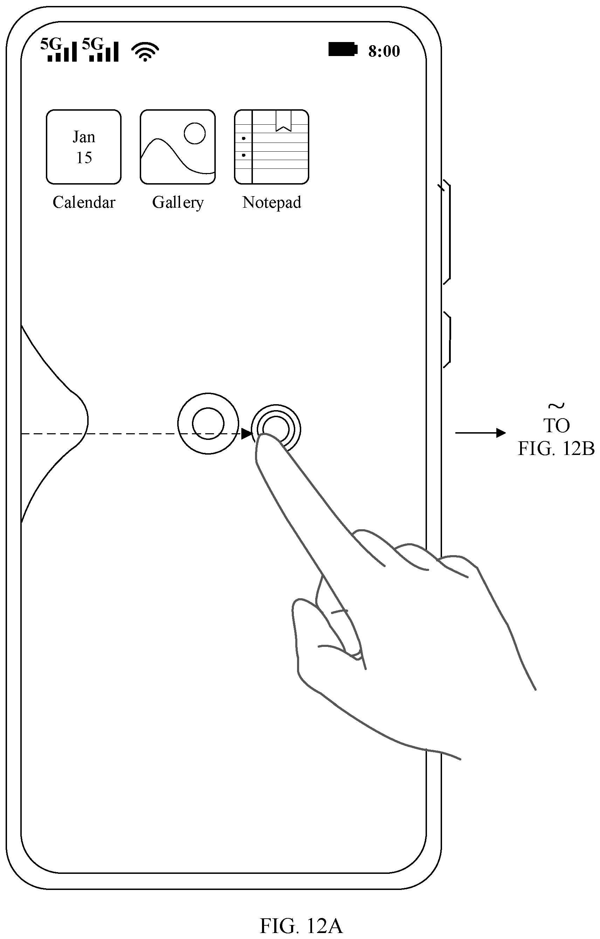

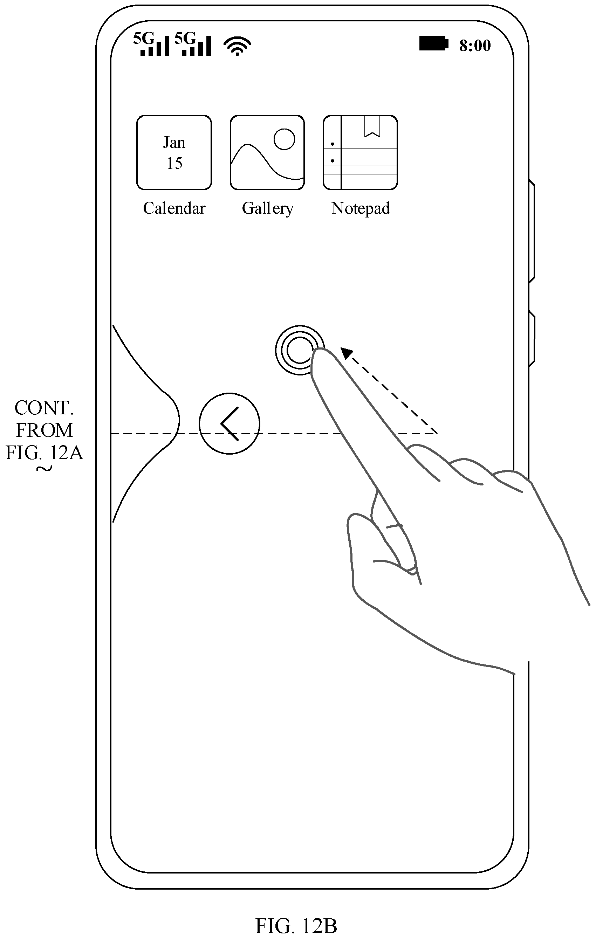

FIG. 12A and FIG. 12B are diagrams in which a finger slides back according to an embodiment of this application;

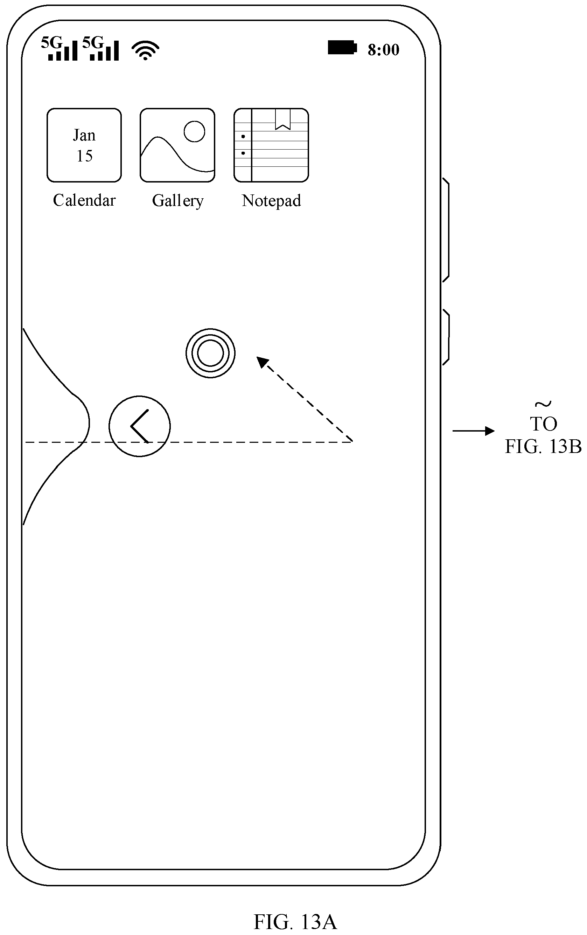

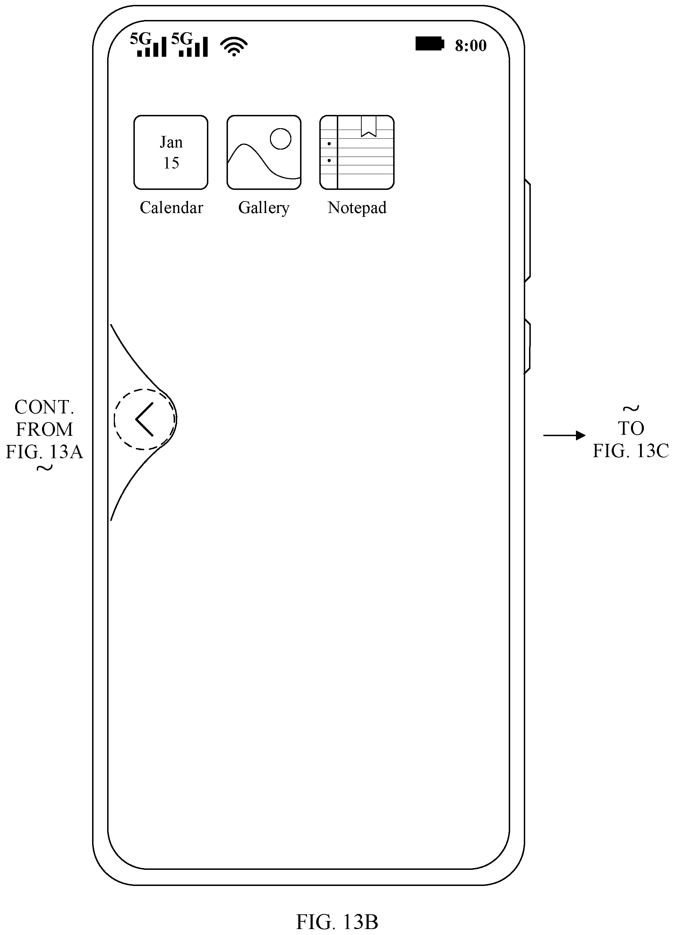

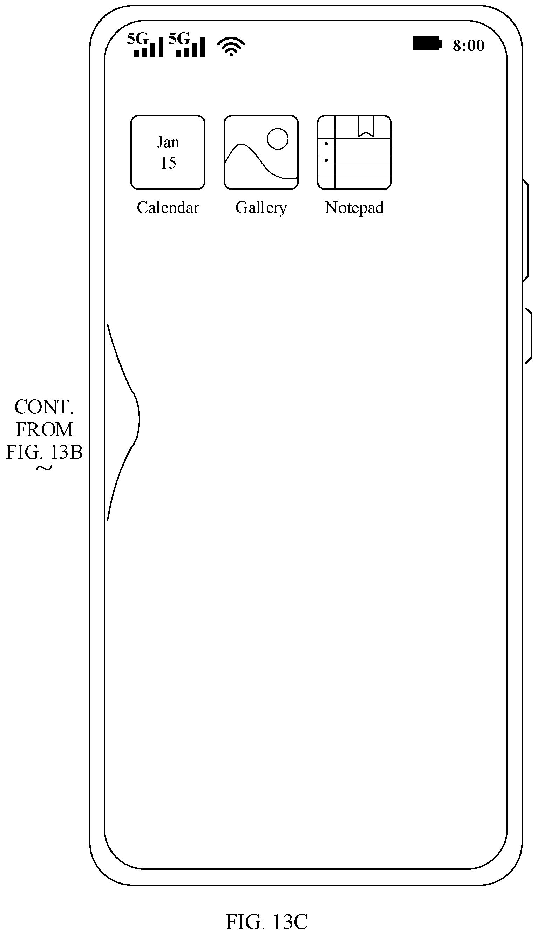

FIG. 13A, FIG. 13B, and FIG. 13C are diagrams of a change of a status of a first interface element after a finger slides back and the finger is lifted according to an embodiment of this application;

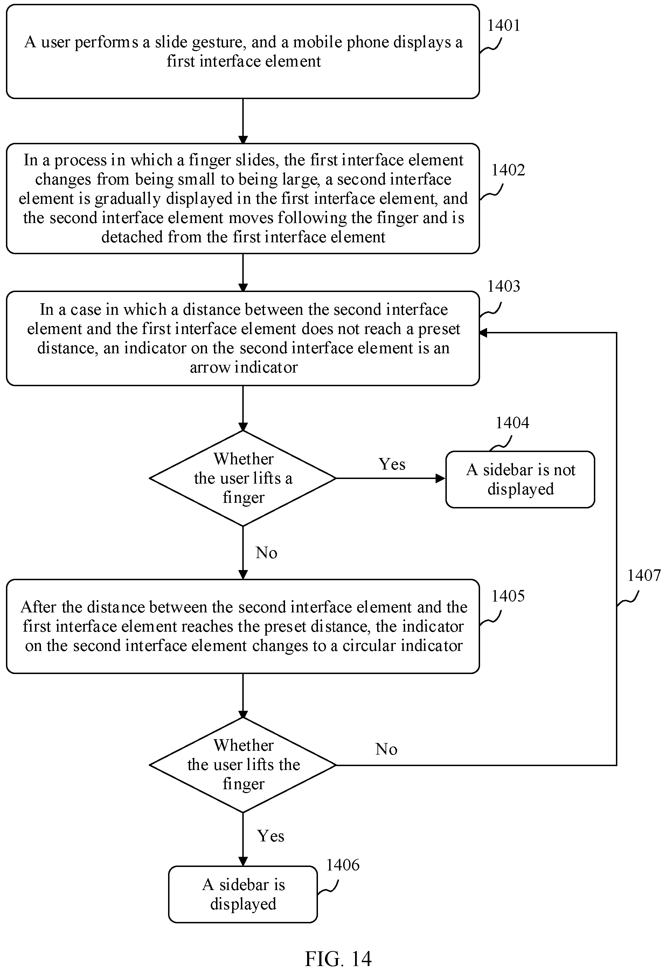

FIG. 14 is a schematic flowchart 2 of a sidebar display method according to an embodiment of this application;

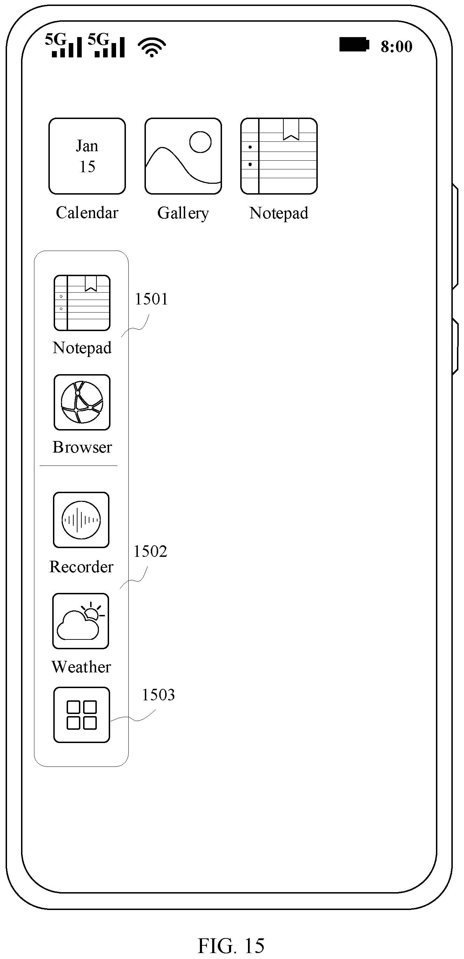

FIG. 15 is a diagram of a sidebar according to an embodiment of this application;

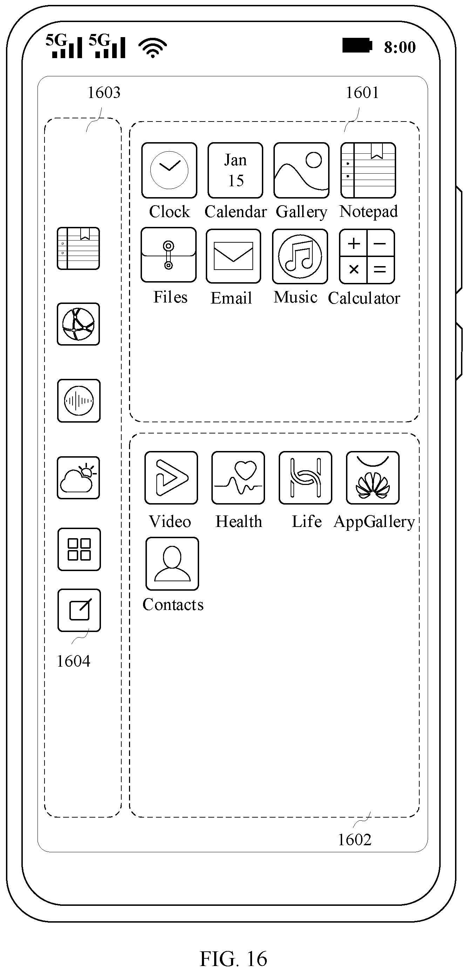

FIG. 16 is a diagram 1 of a first page according to an embodiment of this application;

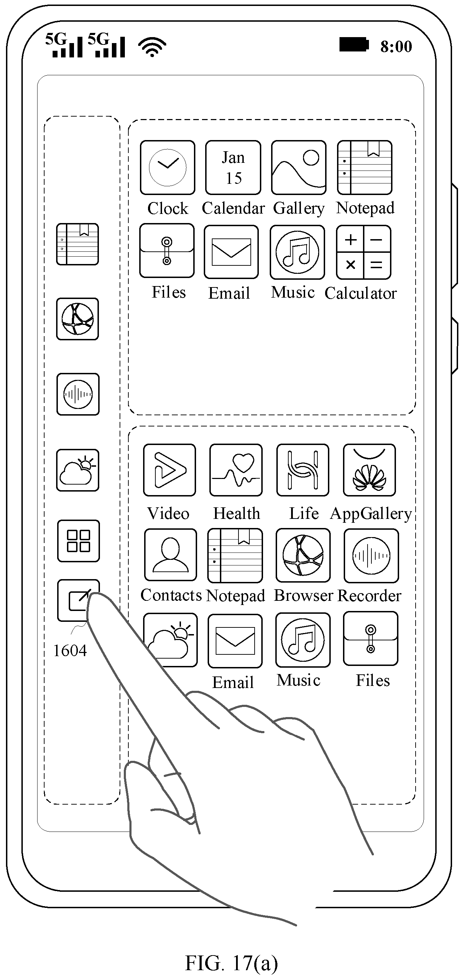

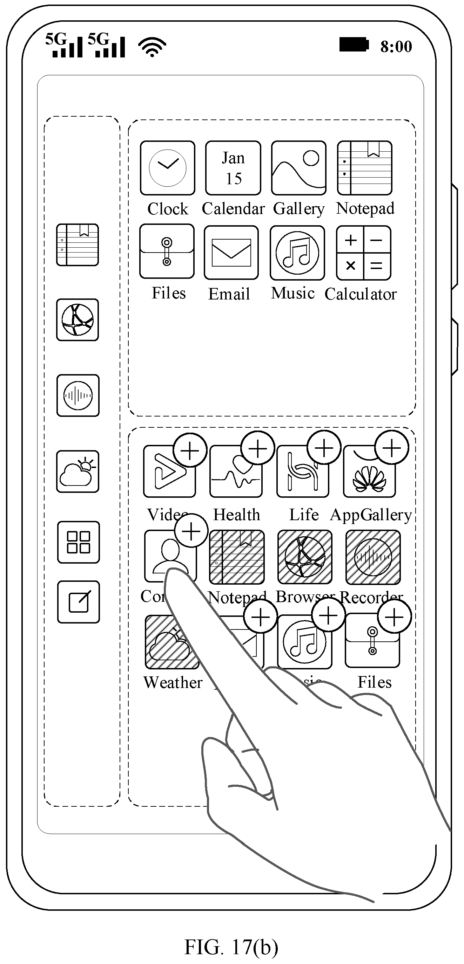

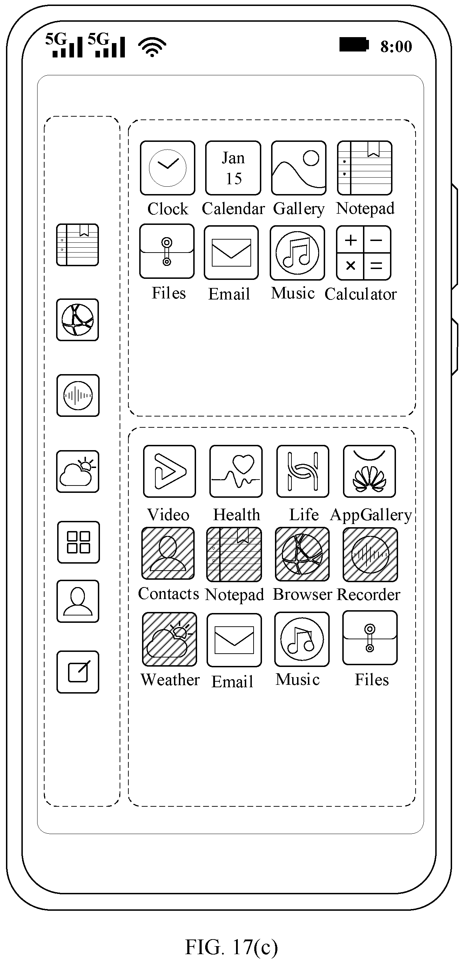

FIG. 17(a), FIG. 17(b), and FIG. 17(c) are a diagram 2 of a first page according to an embodiment of this application;

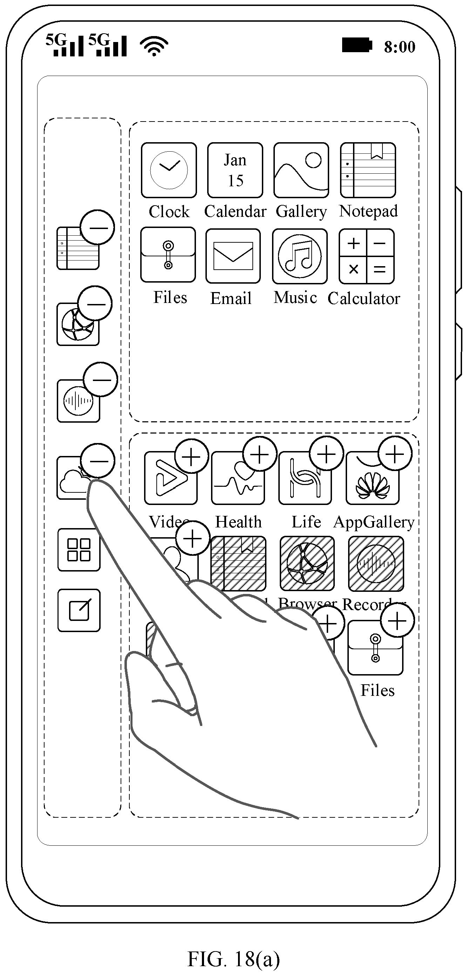

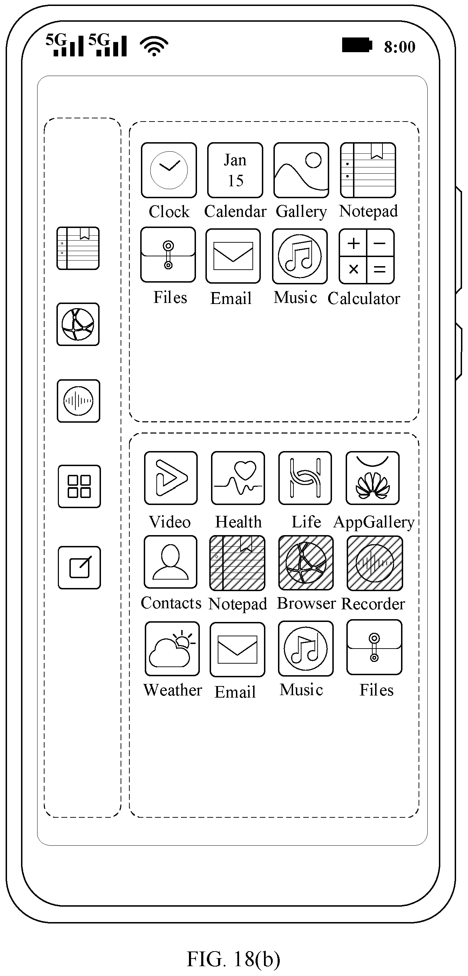

FIG. 18(a) and FIG. 18(b) are a diagram 3 of a first page according to an embodiment of this application; and

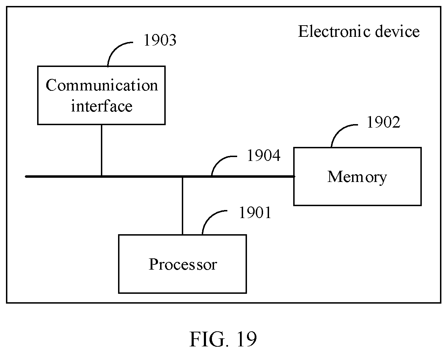

FIG. 19 is a diagram 3 of a structure of an electronic device according to an embodiment of this application.

### DESCRIPTION OF EMBODIMENTS

The following describes the technical solutions in embodiments of this application with reference to the accompanying drawings in embodiments of this application. In descriptions of this application, "/" represents an "or" relationship between associated objects unless otherwise specified. For example, A/B may represent A or B. The term "and/or" in this application indicates only an association relationship for describing associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, a service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

An electronic device usually responds to various gestures of a user to provide a corresponding function for the user. For example, when a finger of the user slides upward from a bottom edge of a screen of a mobile phone, the mobile phone is triggered to display some recently used applications. When the finger of the user slides downward from a top edge of the screen of the mobile phone, the mobile phone is triggered to display a toolbar page. When the finger of the user slides from a left side edge of the screen of the mobile phone to a right side, or slides from a right side edge of the screen of the mobile phone to a left side, the mobile phone is triggered to return to an upper-level page, or the mobile phone is triggered to exit a current application.

In addition, to help the user find a frequently used application, tool, or function, the mobile phone may also provide a sidebar for the user. When the user needs to use a commonly used tool or application, the user may execute a corresponding gesture on the mobile phone, to trigger the mobile phone to display the sidebar.

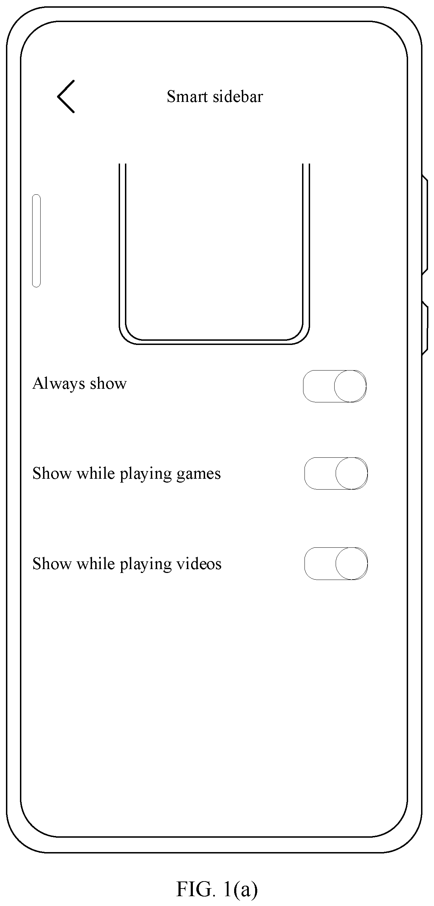

In some examples, the mobile phone may provide a "smart sidebar" option on a settings page. After the user enables the option, the mobile phone may display a smart sidebar page shown in FIG. 1(a). The page includes options for determining whether to show the sidebar in different scenarios, for example, Always show, Show while playing games, and Show while playing videos. The user may choose, based on a requirement of the user, in which scenario to enable the sidebar. If the user chooses enabling the sidebar in all scenarios, the mobile phone displays a floating bar on an edge of the screen. When the user taps the floating bar in any scenario, the sidebar is pulled out on the screen. However, in this manner, even if the user does not want to use the sidebar, the floating bar is still resident on the screen, and the user may accidentally touch the floating bar, which pulls out the sidebar. This affects an operation and experience of the user, and also affects display aesthetics of the screen.

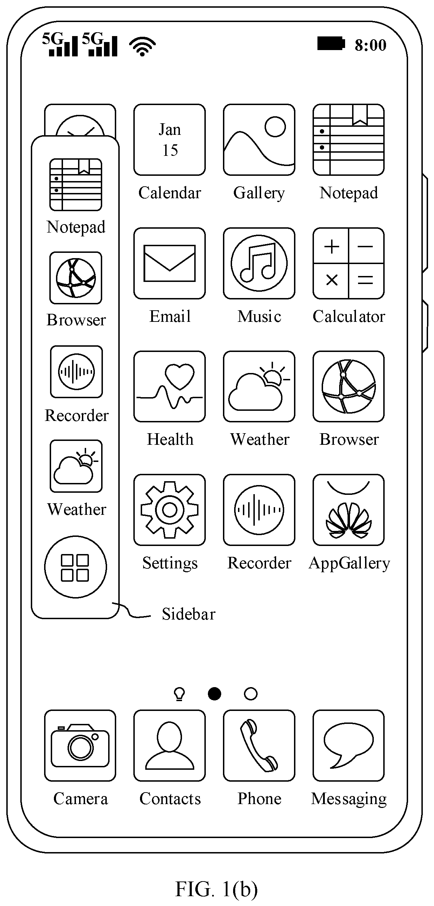

In some other examples, the mobile phone may hide the sidebar, and may display, in response to a specific gesture of the user, a sidebar shown in FIG. 1(b). The specific gesture of the user may be that the finger of the user slides a distance from the left side edge of the screen to the middle of the screen and then continues to press and hold the screen for a period of time, or the finger of the user slides a distance from the right side edge of the screen to the middle of the screen and then continues to press and hold the screen for a period of time. However, in this manner, a condition for pulling out the sidebar is harsh, and the gesture of the user needs to be forced to meet a specific condition. If the condition is not met, the sidebar cannot be pulled out. In an actual operation, the user is prone to an accidental touch or an insensitive operation. The user cannot clearly know whether the gesture meets the condition, whether the sidebar can be pulled out, and the like. As a result, a problem that the user cannot successfully pull out the sidebar after the user lifts the finger easily occurs, which also reduces a success rate of pulling out the sidebar.

In addition, when an original intention of the user is not to pull out the sidebar, the user may also mistakenly pull out the sidebar by using the foregoing gesture. As a result, a probability of accidentally touching the sidebar is also very high.

Based on the foregoing content, an embodiment of this application provides a sidebar display method, and an example in which the method is applied to the electronic device is used. In response to a first slide gesture, the electronic device displays a first interface element in a first state, where the first state indicates a state in which the first interface element changes from being small to being large. Then, in a process in which the first slide gesture continues to slide, the electronic device displays the first interface element and a second interface element, where the first interface element and the second interface element are in a state of being mutually independent. Finally, in response to an operation of ending the first slide gesture, the electronic device stops displaying the second interface element, and displays the sidebar.

In the foregoing method, as a slide gesture moves, an interface element displayed on the electronic device also changes, from displaying the first interface element to displaying the first interface element and the second interface element, and the first interface element and the second interface element are detached from each other, to prompt that the sidebar can be pulled out. After the slide gesture ends, the electronic device displays the sidebar, and does not continue to display the second interface element. The electronic device can better prompt the user through the change of the interface element. The process of displaying the interface element is more intuitive. A change of a status of the interface element enables the user to know when a finger can be lifted to pull out the sidebar. This increases a success rate of pulling out the sidebar, and provides better use experience for the user.

In addition, before a gesture of the user is not received, the sidebar is hidden on one side of the screen, which can also reduce problems of an accidental touch by the user and affecting display aesthetics that are caused because the sidebar is resident on the screen.

In addition, after the user executes the slide gesture, a triggered change of the status of the interface element is obvious. If an original intention of the user is not to pull out the sidebar, the change of the status can also intuitively remind the user, which enables the user to cancel the slide gesture in a timely manner, change the sidebar to be in a state in which the sidebar may not be pulled out, or the like. This can also reduce a probability of accidentally touching the sidebar.

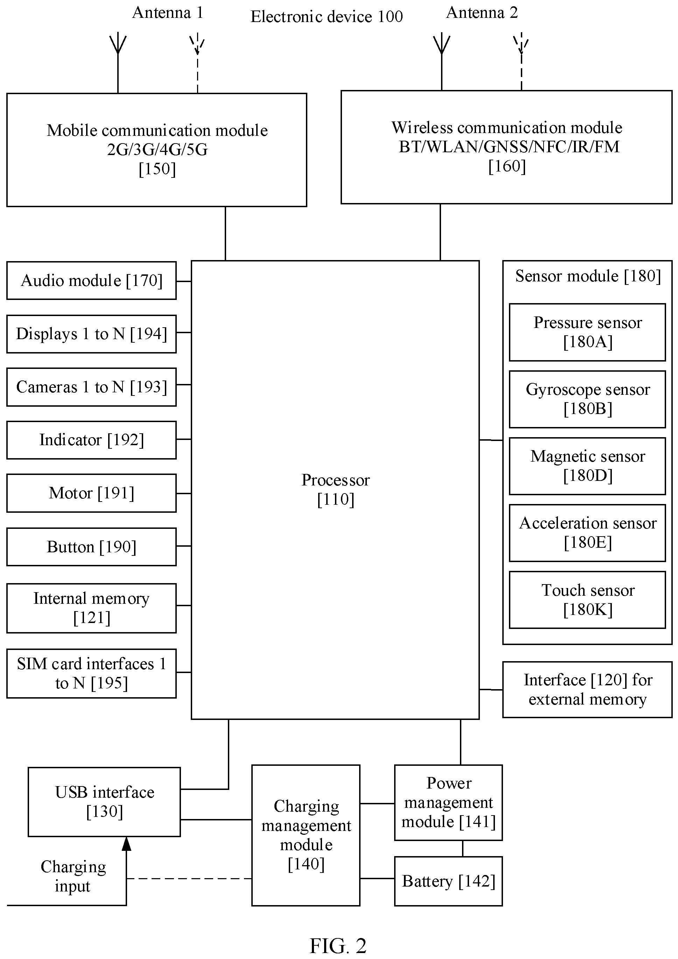

In some embodiments, when the foregoing method is applied to the electronic device, for a structure of the electronic device, refer to FIG. 2. The electronic device 100 may include a processor 110, an interface 120 for external memory, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a magnetic sensor 180D, an acceleration sensor 180E, a touch sensor 180K, and the like.

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

In some possible application scenarios, the electronic device 100 may implement, by using the processor 110, the sidebar display method provided in embodiments of this application.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio by using the headset. The interface may be further configured to connect to another electronic device such as an AR device.

The charging management module 140 is configured to receive a charging input from a charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input by using a wireless charging coil of the electronic device 100. The charging management module 140 supplies power to the electronic device by using the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information. The display 194 is configured to display an image, a video, and the like. In some embodiments, the electronic device 100 may include one or N displays 194. N is a positive integer greater than 1.

In some possible application scenarios, when the electronic device 100 does not receive the gesture of the user, the sidebar is not displayed on the display 194.

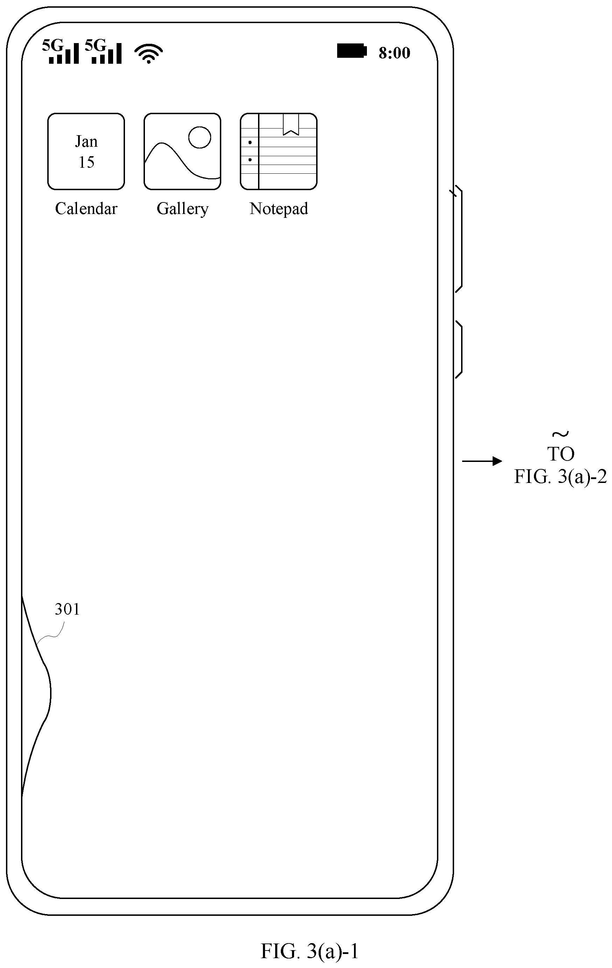

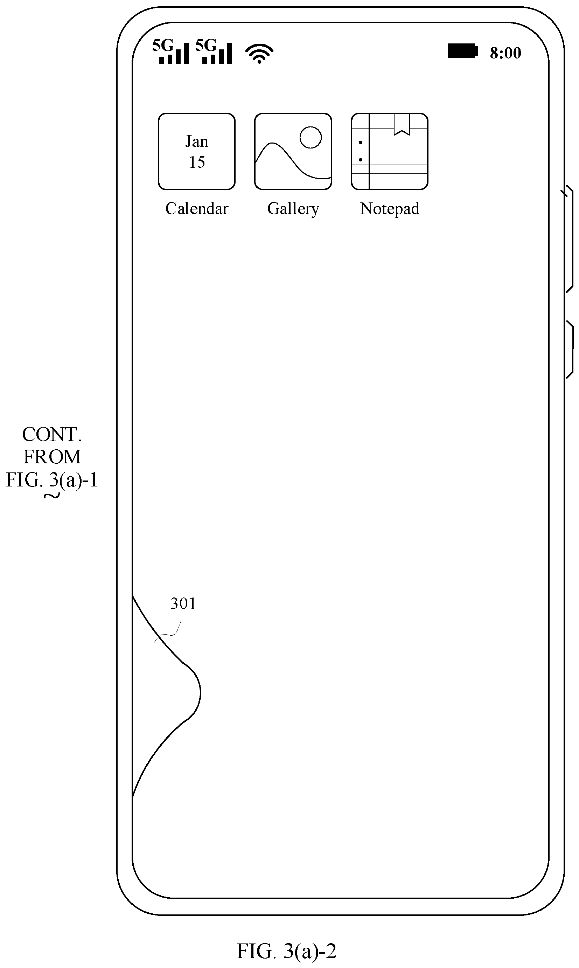

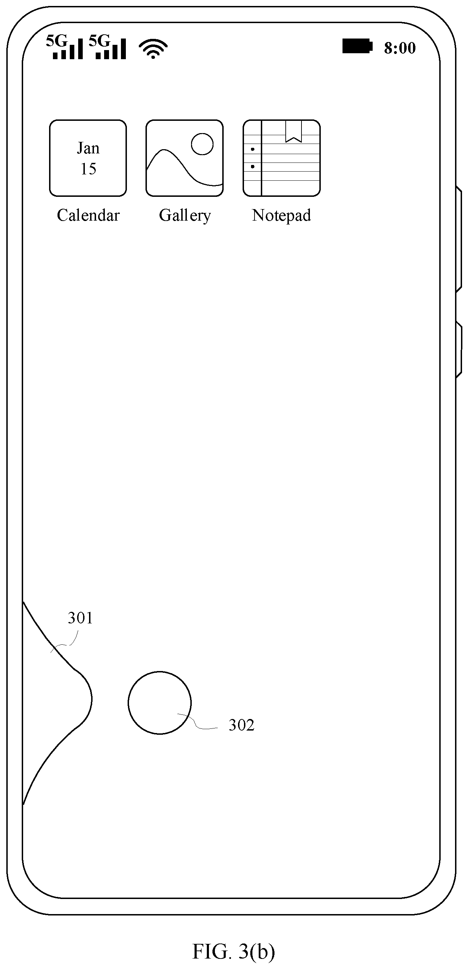

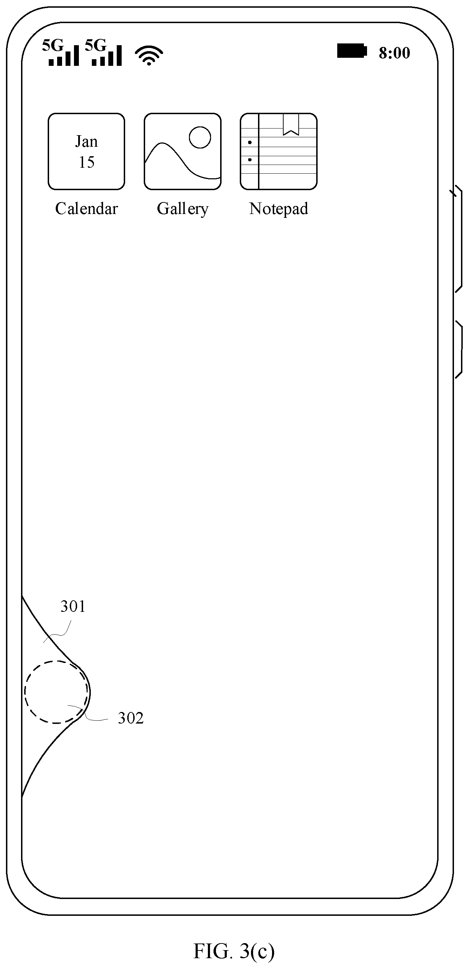

After the electronic device 100 obtains the slide gesture, the display 194 may display the first interface element in the first state. For example, with reference to FIG. 3(a)-1 and FIG. 3(a)-2, the first state of the first interface element 301 may indicate the state in which the first interface element 301 changes from being small to being large. Then, in the process in which the slide gesture, the first slide gesture, continues to slide, the first interface element 301 and the second interface element 302 are displayed. For example, refer to FIG. 3(b). In some examples, a shape of the first interface element 301 may be drawn based on a shape of the second interface element 302. For example, as shown in FIG. 3(c), the second interface element 302 is in a shape of a circle, and the first interface element 301 is in a shape of an arc.

It may be understood that if the display 194 displays the first interface element 301 and the second interface element 302 that are independent, the user may be prompted that the sidebar is in a state in which the sidebar can be pulled out, or this may indicate that the slide gesture of the user meets a condition. Then, the user ends the slide gesture, and the sidebar may be displayed on the display 194.

In the following embodiments, the display 194 may also be referred to as a "screen".

The electronic device 100 may implement a photographing function through the ISP, the camera 193, the video codec, the GPU, the display 194, the application processor, and the like.

The ISP is configured to process data fed back by the camera 193. In some embodiments, the ISP may be disposed in the camera 193.

The camera 193 is configured to capture a static image or a video. In some embodiments, the electronic device 100 may include one or N cameras 193. N is a positive integer greater than 1.

The digital signal processor is configured to process a digital signal, and may process another digital signal in addition to a digital image signal. For example, when the electronic device 100 selects a frequency, the digital signal processor is configured to perform Fourier transformation on frequency energy.

The interface 120 for external memory may be used to connect to an external storage card, for example, a micro SD card, to extend a storage capability of the electronic device 100. The external memory card communicates with the processor 110 through the interface 120 for external memory, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function or an image playing function), and the like. The data storage area may store data (such as audio data and an address book) and the like that are created during use of the electronic device 100. In addition, the internal memory 121 may include a high-speed random access memory, or may include a non-volatile memory, for example, at least one magnetic disk storage device, a flash storage device, or a universal flash storage (universal flash storage, UFS).

The electronic device 100 may implement an audio function, for example, music playing and recording, by using the audio module 170, the application processor, or the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

In some possible application scenarios, the electronic device 100 may detect, by using the pressure sensor 180A, the gesture of the user and a position of a corresponding touch point.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a motion-sensing game scenario.

In some possible application scenarios, the electronic device 100 may detect a gesture of a user, a speed of a gesture change, an acceleration of a gesture change, and the like by using the gyroscope sensor 180B.

The magnetic sensor 180D includes a Hall sensor. The electronic device 100 may detect opening and closing of a flip cover by using the magnetic sensor 180D. In some embodiments, when the electronic device 100 is a flip phone, the electronic device 100 may detect opening and closing of a flip cover by using the magnetic sensor 180D. Further, a feature such as automatic unlocking of the flip cover is set based on a detected opening or closing state of the leather case or a detected opening or closing state of the flip cover.

In some possible application scenarios, the electronic device 100 may detect a gesture of a user, a speed of a gesture change, an acceleration of a gesture change, and the like by using the magnetic sensor 180D.

The acceleration sensor 180E may detect magnitudes of accelerations in various directions (usually on three axes) of the electronic device 100, and may detect a magnitude and a direction of the gravity when the electronic device 100 is still. The acceleration sensor 180E may be further configured to identify a posture of the electronic device, and is used in an application such as switching between a landscape mode and a portrait mode or a pedometer.

In some possible application scenarios, the electronic device 100 may detect a gesture of a user, a speed of a gesture change, an acceleration of a gesture change, and the like by using the acceleration sensor 180E.

The touch sensor 180K is also referred to as a "touch panel". The touch sensor 180K may be disposed in the display 194, and the touch sensor 180K and the display 194 form a touchscreen, which is also referred to as a "touch control screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100, and is located at a location different from that of the display 194.

In some possible application scenarios, the electronic device 100 may detect, by using the touch sensor 180K, a gesture of a user, a speed of a gesture change, an acceleration of a gesture change, a position of a touch point corresponding to the gesture of the user, and the like.

The button 190 includes a power button, a volume button, and the like. The motor 191 may generate a vibration prompt. The motor 191 may be configured to provide an incoming call vibration prompt, or may be configured to provide a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card.

The electronic device provided in this embodiment of this application may run an operating system (operating system, OS). The operating system may be various operating systems applied in the industry, for example, an operating system developed based on OpenHarmony, such as HarmonyOS, or another operating system, such as Android^{™} or an iOS mobile operating system, or may be various open-source operating systems or derivative operating systems thereof, for example, a Linux OS, and another embedded operating system, or may be a future new operating system, for example, an AI operating system based on artificial intelligence. The operating system is a set of interrelated system software programs that manage and control an operation and use of the electronic device, run hardware and software resources, and provide public services to organize user interaction. In the electronic device, the operating system downward connects to a physical device at a hardware layer, and upward provides a running environment for application software. The operating system may usually include: a kernel layer, a middleware layer, and an application layer. The application layer includes applications, and the applications may include system applications and third-party applications. The middleware layer includes a series of software that provides various services for an application developer, or a framework that is configured to provide various services such as a database, a multimedia service, and a graphics service, or provide various capabilities such as distributed scheduling and system expansion. For example, the middleware layer may include a framework layer and/or a system service layer. The framework layer provides application programming interfaces (application programming interfaces, APIs) and a programming framework for the applications at the application layer. The system service layer includes a set of core capabilities of the system and provides services for the applications through the framework layer. The kernel layer is a layer between hardware and software. The kernel layer may include a hardware driver and a kernel of the operating system. In addition to providing the hardware driver, the kernel layer supports functions such as memory management and system process management.

Based on the foregoing content, in some embodiments, for a software architecture of the electronic device, refer to FIG. 4. The layers communicate with each other through a software interface. A system function may be tailored, added, or combined at a subsystem granularity in deployment scenarios of different device forms, and each subsystem may be tailored, added, or combined at a function granularity.

The kernel layer includes a kernel abstract layer, a kernel subsystem, and a drive subsystem.

The kernel abstract layer (kernel abstract layer, KAL) shields a difference among a plurality of kernels and provides a basic kernel ability for an upper layer, including but not limited to process/thread management, memory management, file system management, network management, peripheral management, and the like.

The kernel subsystem supports to use an appropriate OS kernel for different resource-limited devices, including but not limited to a Linux kernel, a Harmony kernel, LiteOS (Lite Operating System), and the like.

A drive framework in the drive subsystem is a basis of hardware ecosystem openness of the system, and may provide a unified peripheral access capability and a drive development and management framework. The driver framework includes a display driver, a camera driver, an audio driver, a Bluetooth driver, a sensor driver, and the like.

The system service layer includes a set of core capabilities of the system and provides services for the applications through the framework layer. This layer includes subsystem sets, but is not limited to the following.

System basic capability subsystem set: provides a basic capability for running, scheduling, and migration of a distributed application on a plurality of devices. The system basic capability subsystem set may include a distributed soft bus, distributed data management, distributed task scheduling, and Ark multi-language runtime, and also includes a multi-mode input subsystem, a graphics subsystem, a security subsystem, an AI service subsystem, and the like.

Basic software service subsystem set: provides public and general software services. The basic software service subsystem set may include an event notification subsystem, a phone subsystem, a multimedia subsystem, and the like.

Enhanced software service subsystem set: provides differentiated enhanced software services for different devices. The enhanced software service subsystem set may include a smart screen-dedicated service subsystem, a wearable-dedicated service subsystem, an IoT-dedicated service subsystem, and the like.

Hardware service subsystem set: provides a hardware service. The hardware service subsystem set may include a location service subsystem, a user's unified identity and access management (identity and access management, IAM) subsystem, a wearable-dedicated hardware service subsystem, biometric feature recognition, an IoT-dedicated hardware service subsystem, and the like.

Distributed task scheduling may implement distributed service management (discovery, synchronization, registration, and calling), and supports remote startup, remote calling, remote connecting, and migration of a cross-device application.

Distributed data management may implement data synchronization, data storage, data sharing, and data access functions across devices in all scenarios.

The distributed soft bus provides communication-related capabilities for seamless interconnection between a plurality of devices, including a WLAN service capability, a Bluetooth service capability, a soft bus, inter-process communication (remote procedure call, RPC), and SparkLink.

The Ark multi-language runtime is a unified compilation and runtime platform designed to support joint compilation and running of a plurality of programming languages and a plurality of chip platforms.

The framework layer provides the application programming interfaces (application programming interfaces, APIs) and the programming framework for the applications at the application layer. The framework layer includes an ArkUI framework (the ArkUI framework provides complete infrastructure for UI development of a system application, including UI functions such as a component, a layout, an animation, an interaction event, and a real-time interface preview tool), a user program framework, and an ability framework (an ability is a lightweight application, and the ability framework schedules and manages running and a life cycle of the ability). Different devices may run different operating systems and support different APIs.

HarmonyOS APIs are a series of open capabilities provided to support HarmonyOS application development. The HarmonyOS APIs may be set at the framework layer or be set independent of the framework layer. HarmonyOS APIs include an audio API (an audio service), a push API (a push service), an account API (an account service), and the like.

The application programs may include the system applications and extended applications/third-party applications. The system applications may include applications such as desktop, control bar, sidebar, settings, contacts, phone, and camera applications. The extended applications/third-party applications may include a social application, a travel application, and the like.

Electronic devices used in daily life come in a wide variety of types and forms, and scenarios in which the electronic devices are applied are also very broad. Therefore, based on different forms and functions of the electronic devices, different application scenarios, and different user requirements, operating systems applied to the electronic devices may also be different. A basic function implemented by the electronic device provided in embodiments of this application may be implemented by using a general-purpose operating system, or may be implemented by using a dedicated operating system. To more clearly describe implementation of embodiments of this application in a specific operating system, an architecture of HarmonyOS is shown below. Based on this, a person skilled in the art may derive implementation of embodiments of this application in another specific operating system, for example, implementation in an operating system such as Android^{™}.

It may be understood that the electronic device in embodiments of this application may be a mobile phone, a tablet computer, a smartwatch, a vehicle-mounted terminal, a handheld computer, a notebook computer, a personal computer (personal computer, PC), an ultra-mobile personal computer (ultra-mobile personal computer, UMPC), a netbook, a personal digital assistant (personal digital assistant, PDA), an augmented reality (augmented reality, AR)/virtual reality (virtual reality, VR) device, a smart home device (such as a smart television, a smart screen device, or a smart central control device), or the like. A specific form of the electronic device is not specially limited in embodiments of this application.

The following describes the foregoing sidebar display method by using an example in which the electronic device is the mobile phone.

In some embodiments, with reference to FIG. 5, the sidebar display method may include the following steps S501 to S503.

S501: In response to a first slide gesture, the mobile phone displays a first interface element in a first state.

The first state indicates a state in which the first interface element changes from being small to being large. That is, the first interface element may change, following the first slide gesture, from being small to being large.

In some possible application scenarios, the first slide gesture may completely start from a first side edge of a screen of the mobile phone. That is, when the first slide gesture starts, a touch point of the first slide gesture on a screen of the mobile phone starts to slide from the first side edge. Alternatively, the first slide gesture may not completely start from a first side edge of a screen of the mobile phone. For example, when the first slide gesture starts, there is a specific distance between a touch point of the first slide gesture on the screen of the mobile phone and the first side edge. The distance may be preset, or may be customized by a user.

In some possible application scenarios, a slide direction of the touch point of the first slide gesture on the screen may be a first direction, or the touch point may slide from the first side edge of the screen in the first direction. The first direction may be a direction in which a center of the screen is located, a direction in which a second side edge of the screen is located, or the like. For example, the first side edge may be a left side edge, or may be a right side edge. When the first side edge is the left side edge, the second side edge may be the right side edge, and the first direction is a direction from left to right on the screen. When the first side edge is the right side edge, the second side edge may be the left side edge, and the first direction is a direction from right to left on the screen. It can be learned that in this embodiment of this application, regardless of whether the user starts the slide gesture from the left side edge or the right side edge of the screen of the mobile phone, the mobile phone can display the first interface element, thereby providing more operation space and better operation experience for the user.

In addition, that the touch point slides in the first direction may mean that a slide trajectory of the touch point has a component in the first direction.

In some possible application scenarios, the first interface element in the first state that is displayed by the mobile phone may be the first interface element that is extended from the first side edge of the screen. That is, a side on which the first slide gesture starts is a side on which the first interface element is extended, and the first interface element changes from being small to being large. This provides more intuitive experience for the user.

In some possible application scenarios, the first state may indicate the state in which the first interface element changes from being small to being large. For example, the first interface element may change, following the touch point of the first slide gesture on the screen, from being small to being large, and the touch point may slide in the first direction.

In some examples, in the first state, in a process in which the first interface element changes, if a size of the first interface element does not reach a specific threshold, the mobile phone may display the first interface element. If the size of the first interface element reaches the specific threshold, the mobile phone may display the first interface element and the second interface element that are in an attached state, as shown in (a) in FIG. 6. That is, the mobile phone may display the first interface element and the second interface element that are in a second state, and in the second state, the first interface element is attached to the second interface element.

In some examples, in a process in which the first slide gesture continues to slide, a position of the second interface element may continue to move following the touch point of the first slide gesture on the screen, but the second interface element is not detached from the first interface element, as shown in (b) in FIG. 6.

A change of a status of the first interface element may prompt the user of a change of the position of the slide gesture. In the second state, a sidebar may alternatively be in a state in which the sidebar cannot be pulled out.

It may be understood that to match a usage habit or an operation habit of the user, the interface element displayed by the mobile phone may be extended at a position at which the slide gesture starts, so that a position at which the interface element is displayed is the same as the position at which the user initiates the slide gesture. This provides better operation experience for the user. Certainly, in some other possible application scenarios, the interface element displayed by the mobile phone may further be extended at a fixed position on a side edge of the screen. The fixed position may be preset, or may be customized by the user. The position at which the interface element is displayed is not specifically limited in embodiments of this application.

S502: In a process in which the first slide gesture continues to slide, the mobile phone displays the first interface element and the second interface element, where the first interface element and the second interface element are in a state of being mutually independent.

In some possible application scenarios, the second interface element and the first interface element are mutually independent, which may indicate that the second interface element is detached from the first interface element. After the second interface element is independent, the position of the second interface element may continue to move following the touch point of the first slide gesture on the screen. A change of the position of the second interface element is obvious, and can more intuitively prompt the user of the change of the interface element. The second interface element and the first interface element are mutually independent, which may indicate that the sidebar is in the state in which the sidebar can be pulled out, or indicate that the slide gesture meets a condition. In this way, the user can clearly know, based on the status of the element, when a finger can be lifted to successfully pull out the sidebar.

In some possible application scenarios, in a process in which the second interface element and the first interface element change from being attached to each other to being mutually independent, an attached part between the second interface element and the first interface element gradually becomes small as the touch point slides, until the attached part completely disappears.

The first interface element and the second interface element may be in a plurality of shapes. This is not specifically limited in embodiments of this application.

In some examples, the first interface element is in a shape of an arc, and the second interface element is in a shape of a circle. In the second state, the shape of the first interface element is drawn based on the shape of the second interface element. For example, as shown in (a) in FIG. 6, a protruding part of an element in the shape of an arc overlaps an edge of an element in the shape of a circle. Alternatively, as shown in (b) in FIG. 6, a protruding part of an element in the shape of an arc has a same radian as an edge of an element in the shape of a circle.

In some examples, with reference to (a) to (d) in FIG. 7, an attached part between the element in the shape of an arc and the element in the shape of a circle is gradually decreased until the element in the shape of an arc and the element in the shape of a circle are completely detached. In a process in which the element in the shape of a circle is gradually detached from the element in the shape of an arc, a diameter of a dashed circle 701 and that of a dashed circle 702 are gradually decreased. When a distance between the element in the shape of a circle and the element in the shape of an arc is greater than or equal to the diameter of the dashed circle 701 and that of the dashed circle 702, the attached part completely disappears, and the element in the shape of a circle is completely detached from the element in the shape of an arc. In this embodiment, the mobile phone displays the first interface element and the second interface element. The state in which the first interface element and the second interface element are mutually independent is a scenario shown in (d) in FIG. 7.

In a process in which the interface elements change from being attached to each other to being mutually independent, the first interface element is in the shape of an arc, and the second interface element is in the shape of a circle. This can make a change process smoother, visually make the user feel that a ball is "squeezed" from the first interface element in a process in which the finger slides, make changes of statuses of the elements more intuitive, and also provide a prompt of the changes of statuses for the user.

In some possible application scenarios, before the second interface element is not detached from the first interface element (or the second interface element is not independent of the second interface element), the mobile phone displays the second interface element in a first display manner. In some other possible application scenarios, if a distance between the second interface element and the first interface element does not reach a preset distance, the mobile phone displays the second interface element in the first display manner. If the distance between the second interface element and the first interface element reaches the preset distance, the mobile phone displays the second interface element in a second display manner.

The first display manner is different from the second display manner, and the second display manner may indicate that the sidebar is in the state in which the sidebar can be pulled out, or indicate that the slide gesture meets the condition. In this way, the user can clearly know, based on a display manner of the second interface element, when the finger can be lifted to successfully pull out the sidebar.

In addition, the distance between the first interface element and the second interface element is affected by a slide distance of the touch point of the first slide gesture. After sliding of the touch point (or the first slide gesture) meets a specific distance condition, the distance between the second interface element and the first interface element may reach the preset distance. That is, a limitation on the distance between the interface elements can also reflect a limitation on the slide distance of the slide gesture. For the user, the user may not know how much distance the slide gesture needs to slide to successfully pull out the sidebar. However, through a change of the display manner of the second interface element, the user can clearly and intuitively learn that the slide gesture meets a specific condition or requirement, and in this case, the sidebar can be successfully pulled out.

It may be understood that the preset distance may be a preconfigured distance, or may be a distance customized by the user based on a requirement. This is not specifically limited in embodiments of this application. In addition, the first display manner and the second display manner are not specifically limited in embodiments of this application.

In some examples, the first display manner may include an arrow indicator, and the second display manner may include a circular indicator.

For example, before the second interface element is detached from the first interface element, with reference to FIG. 8(a), the arrow indicator is displayed on the second interface element. In a case in which the distance between the second interface element and the first interface element does not reach the preset distance, with reference to FIG. 8(b), the arrow indicator is still displayed on the second interface element. In a case in which the distance between the second interface element and the first interface element reaches the preset distance, a circular indicator is displayed on the second interface element, for example, as shown in FIG. 8(c).

It may be understood that in a process in which the second interface element moves following the touch point, the second interface element may overlap the touch point, or may not overlap the touch point. This is not specifically limited in embodiments of this application.

In some possible application scenarios, when the second interface element is displayed in the second display manner, the mobile phone may further display an edge of the sidebar on the first side edge of the screen. For example, refer to FIG. 9. Therefore, the edge of the sidebar and the second display manner jointly indicate that the sidebar is in the state in which the sidebar can be pulled out, which provides intuitive visual experience for the user.

In some other possible application scenarios, the display manner of the second interface element may alternatively remain unchanged, but in the process in which the first slide gesture continues to slide, the mobile phone may display the edge of the sidebar on a side edge of the screen. Displaying the edge of the sidebar may indicate that the sidebar is in the state in which the sidebar can be pulled out. This can also provide intuitive visual experience for the user.

S503: In response to an operation of ending the first slide gesture, the mobile phone stops displaying the second interface element, and displays the sidebar.

Ending of the first slide gesture may indicate that the user lifts the finger after sliding the finger on the screen.

It can be learned based on the content of the foregoing embodiments that there are a plurality of manners that may indicate that the sidebar is in the state in which the sidebar can be pulled out. Therefore, in a plurality of cases, in response to the operation of ending the first slide gesture, the mobile phone may stop displaying the second interface element, and display the sidebar. This provides more operation and visual experience for the user.

In some examples, the second interface element is detached from the first interface element, which may indicate that the sidebar can be pulled out. In this case, when the user ends the first slide gesture, the sidebar can be pulled out.

In some examples, after the second interface element changes to be displayed in the second display manner, it may indicate that the sidebar can be pulled out. In this case, the user ends the first slide gesture. In response to the operation of ending the first slide gesture, the mobile phone may display the sidebar. In this way, the user successfully pulls out the sidebar.

In some examples, after the second interface element changes to be displayed in the second display manner, and the edge of the sidebar is displayed on the first side edge of the screen, it may indicate that the sidebar can be pulled out. In this case, the user ends the first slide gesture. In response to the operation of ending the first slide gesture, the mobile phone may display the sidebar. In this way, the user successfully pulls out the sidebar.

In some possible application scenarios, in the process in which the first slide gesture continues to slide, the first interface element gradually becomes small and disappears. For details, refer to FIG. 10A, FIG. 10B, and FIG. 10C. In this way, the user can also visually feel the change of the interface element.

In some possible application scenarios, before the first slide gesture ends, the second interface element may be displayed in the second display manner. In this way, the user may be prompted that the sidebar is in the state in which the sidebar can be pulled out. In this case, if the user lifts the finger, the sidebar can be pulled out.

In some examples, changes of display interfaces in S501 to S503 are shown in FIG. 11 A, FIG. 11B, FIG. 11C, and FIG. 11D.

In some embodiments, in response to the first slide gesture, the mobile phone displays the first interface element in the first state. Then, the first slide gesture continues to slide, and in a process in which the touch point of the first slide gesture on the screen slides from the screen in the first direction, the second interface element may be updated from the first display manner to the second display manner; and/or in a process in which the touch point of the first slide gesture on the screen slides from the screen in a second direction, the second interface element may be updated from the second display manner to the first display manner.

The second direction is different from the first direction. For example, the second direction is opposite to the first direction. In a process in which the touch point slides in the first direction, the second interface element is displayed in the second display manner, which indicates that the sidebar can be pulled out. The second direction may indicate that after starting to slide from the first side edge, the first slide gesture slides in an opposite direction, or has a tendency to slide back to the first side edge (for example, the finger slides back), as shown in FIG. 12A and FIG. 12B, where a dashed line indicates a slide direction of the finger or touch point. This case may be caused by a misoperation of the user, or may be caused by a user's intention to cancel the operation of pulling out the sidebar. Regardless of a reason, the slide direction is opposite. In this case, the mobile phone may display the second interface element in the first display manner again, which indicates that the sidebar cannot be pulled out.

In addition, when the finger slides back, the distance between the second interface element and the first interface element is decreased, and consequently, the distance between the second interface element and the first interface element may not reach the preset distance. In this case, the mobile phone displays the second interface element in the first display manner again, which also indicates that the sidebar is in a state in which the sidebar cannot be pulled out.

In some embodiments, in response to the first slide gesture, the mobile phone displays the first interface element in the first state. Then, the first slide gesture continues to slide. In the process in which the touch point of the first slide gesture on the screen slides from the screen in the first direction, the mobile phone may display the first interface element and the second interface element that are in the second state. In the process in which the touch point of the first slide gesture on the screen slides from the screen in the second direction, the mobile phone may display the first interface element in a third state.

The third state may be opposite to the first state. For example, the third state indicates a state in which the first interface element changes from being large to being small. If the second direction is opposite to the first direction, the touch point slides in the first direction, and the mobile phone displays the first interface element and the second interface element that are attached to each other. When the finger slides back, the first interface element displayed by the mobile phone gradually becomes small. In this way, the slide direction of the touch point can be prompted through the change of the interface element.

In addition, when the finger slides back, the distance between the second interface element and the first interface element is decreased, and consequently, the distance between the second interface element and the first interface element may not reach the preset distance, or even the second interface element may be re-attached to the first interface element, and then, the finger continues to slide back. In this way, the first interface element can gradually become small, as shown in FIG. 13A, FIG. 13B, and FIG. 13C, and can also indicate that the sidebar is the state in which the sidebar cannot be pulled out.

In some embodiments, if the second direction is opposite to the first direction, in response to an operation that is performed when the touch point of the first slide gesture on the screen slides in the first direction and that ends the first slide gesture, the mobile phone may stop displaying the first interface element and/or the second interface element, to indicate that the sidebar cannot be pulled out.

In some embodiments, in a process in which the touch point of the first slide gesture moves in the first direction, if the distance between the second interface element and the first interface element does not reach the preset distance, the second interface element is displayed in the first display manner, which also indicates that the sidebar is the state in which the sidebar cannot be pulled out. In this case, the user ends the first slide gesture. In response to the operation of ending the first slide gesture, the mobile phone may stop displaying the first interface element and the second interface element.

In some embodiments, after receiving the first slide gesture, the mobile phone may further detect a slide speed of the first slide gesture in a period of time. If the slide speed in the period of time is too fast, it may be considered as a misoperation by the user, or considered as that the user intends to perform a return operation by using the first slide gesture. In this case, the mobile phone does not display the sidebar.

For example, if the mobile phone detects that the slide speed of the first slide gesture within 0.1s is continuously greater than or equal to 1 vp/ms, it is determined that the speed of the first slide gesture is too fast. Therefore, even if the mobile phone has displayed the first interface element in response to the first slide gesture, the mobile phone does not display the sidebar after the user lifts the finger. In addition, the mobile phone may perform a return operation in response to the first slide gesture, to return a currently displayed application page to an upper-level page or return to a desktop. If the mobile phone has currently displayed the desktop, the mobile phone does not respond after the user lifts the finger.

With reference to the foregoing embodiments, it can be learned that the foregoing sidebar display method may prompt the user that the sidebar can be pulled out or cannot be pulled out, which provides a more intuitive prompt for the user. In this way, the user can clearly know when the finger can be lifted to pull out the sidebar, thereby increasing a success rate of pulling out the sidebar. For example, with reference to FIG. 14, in S1401, the mobile phone displays the first interface element in a process in which the user performs the slide gesture. In S1402, in a process in which the finger slides, the first interface element changes from being small to being large, the second interface element is gradually displayed in the first interface element, and the second interface element moves following the finger and is detached from the first interface element. In S1403, in a case in which the distance between the second interface element and the first interface element does not reach the preset distance, an indicator on the second interface element is an arrow indicator. In S1404, if the user lifts the finger, the mobile phone does not display the sidebar. In S1405, if the user does not lift the finger, after the distance between the second interface element and the first interface element reaches the preset distance, the indicator on the second interface element changes to a circular indicator. In S1406, if the user lifts the finger, the mobile phone displays the sidebar. In S1407, if the user does not lift the finger, whether the distance between the second interface element and the first interface element reaches the preset distance continues to be determined. If the preset distance is not reached, the indicator on the second interface element changes to an arrow indicator.

In some embodiments, the sidebar may include at least two areas, for example, a first area and a second area. The first area includes at least one application icon. The at least one application icon in the first area includes an icon that corresponds to a preset application and/or an icon that corresponds to an application recommended by a system. The second area includes an application icon of a locked application. In some examples, the second area may further include a function icon. The function icon is used to trigger displaying of an expanded page of the sidebar. For example, with reference to FIG. 15, the sidebar may be a rectangular display box displayed near the side edge of the screen. The first area 1501 includes an application icon that corresponds to a memo application commonly used by the user, an application icon that corresponds to a browser application, and the like. The second area 1502 includes an application icon that corresponds to a recorder application, an application icon that corresponds to a weather application, and a function icon 1503. The recorder application and the weather application are locked applications. After tapping the application icon of the locked application, the user needs to enter a password. The user is allowed to use the application only when the password is successfully verified. This can better protect user privacy, and improve application security.

The application recommended by the system in the first area may be an application recommended by the system based on a frequency, a quantity of times, or the like that the application is used, or an application recommended based on a preference, a usage habit, or the like of the user. This is not specifically limited in embodiments of this application.

The sidebar may display some application icons. If there are excessive application icons, the sidebar cannot completely display all application icons. Therefore, in some examples, the user may perform the operation of expanding the sidebar. In response to the operation of the user, the mobile phone displays the first page obtained after the sidebar is expanded. At least one application icon may be displayed on the first page, which helps the user select more applications for use, locking, or unlocking. When locking is performed, the user may select the application icon on the first page, and in response to the operation of the user, the mobile phone adds the application icon selected by the user to the second area.

For example, the mobile phone displays the first page in response to the operation of tapping the function icon by the user. The first page includes a third area, a fourth area, and a fifth area. Each area may display an application icon, but functions of the areas are different. For example, as shown in FIG. 16, the third area 1601 includes at least one application icon. The at least one application icon includes the icon that corresponds to the preset application and/or the icon that corresponds to the application recommended by the system. The application herein may be a third-party application, or may be a non-third-party application, and the application may also be a "tool" on a mobile phone, such as a calculator, a measure, or a flashlight. The fourth area 1602 includes an application icon of at least one application in the mobile phone. The fifth area 1603 includes an application icon of at least one locked application. It may be understood that the fifth area may be the second area or an expanded area of the second area.

For another example, after the sidebar is expanded, the user may further tap the function icon again, so that the mobile phone controls the sidebar to be collapsed, the sidebar is changed back to be displayed in a display manner shown in FIG. 15.

It may be understood that to match a usage habit or an operation habit of the user, the sidebar and the first interface element may be displayed on a same side edge of the screen. This provides better operation experience for the user. Certainly, in some other possible application scenarios, the sidebar may be further displayed on a side edge different from that of the first interface element. Display positions of the sidebar and the interface element are not specifically limited in embodiments of this application.

In some other embodiments, the fifth area of the sidebar may further include an edit icon 1604. The user may set the locked application, cancel the locked application, or the like by using the edit icon. For example, with reference to FIG. 17(a), the user taps the edit icon 1604. In response to an operation of tapping the edit icon by the user, the mobile phone controls the at least one application icon in the fourth area to be changed to be in an editable state, as shown in FIG. 17(b). The editable state may include displaying a "+" indicator in an upper right corner of the application icon, and the application icon jitters on the page. Then, in response to an operation of selecting an application icon by the user from the at least one application icon in the editable state in the fourth area, the mobile phone adds the application icon selected by the user to the fifth area, and changes the application icon selected by the user in the fourth area to be in an unselectable state, as shown in FIG. 17(c). In this way, an application corresponding to the application icon selected by the user may be locked. The unselectable state of the application icon may be that for example, the icon is dimmed.

For another example, after the user taps the edit icon, the at least one application icon in the fifth area may also be changed to be in the editable state. With reference to FIG. 18(a), the editable state of the application icon in the fifth area may include displaying a "-" indicator in an upper right corner of the application icon, and the application icon jitters on the page. Then, in response to an operation of selecting an application icon by the user from the at least one application icon in the editable state in the fifth area, the mobile phone prompts the user to enter a password. After the password entered by the user is successfully verified, the mobile phone changes the application icon selected by the user in the fourth area to be in a selectable state, and deletes, from the fifth area, the application icon selected by the user, as shown in FIG. 18(b). In this way, an application corresponding to the application icon selected by the user may be unlocked.

In the foregoing embodiments, the user triggers a function on the mobile phone by using a gesture. In some other embodiments, the user may further trigger the function on the mobile phone by using a voice instruction. For example, in response to the voice instruction of the user, the mobile phone displays the first page corresponding to the sidebar. Alternatively, in response to the voice instruction of the user, the mobile phone controls the application icon to be changed to be in the editable state.

In the foregoing embodiments, the method is described by using an example in which the mobile phone implements the sidebar display method. In some other embodiments, the method may also be applied to a tablet computer, a smartwatch, a vehicle-mounted terminal, a handheld computer, a notebook computer, a PC, a UMPC, a netbook, a PDA, an AR/VR device, a smart home device (such as a smart television, a smart screen device, or a smart central control device), and the like. In some solutions, a plurality of embodiments of this application may be combined, and a combined solution is implemented. Optionally, some operations in procedures of the foregoing method embodiments are randomly combined, and/or a sequence of some operations is randomly changed. In addition, an execution sequence between steps of each procedure is merely an example, and does not constitute a limitation on an execution sequence between the steps. The steps may alternatively be performed in another execution sequence. It is not intended to indicate that the execution sequence is an only sequence in which these operations can be performed. A person of ordinary skill in the art may figure out a plurality of manners to reorder the operations described in embodiments of this application. In addition, it should be noted that process details in an embodiment of this application are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

It may be understood that to implement the foregoing functions, the electronic device includes a corresponding hardware and/or software module for performing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in this embodiment is an example and is merely logical function division. During actual implementation, there may be another division manner.

An embodiment of this application further provides an electronic device. As shown in FIG. 19, the electronic device may include one or more processors 1901, a memory 1902, and a communication interface 1903.

The memory 1902 and the communication interface 1903 are coupled to the processor 1901. For example, the memory 1902, the communication interface 1903, and the processor 1901 may be coupled together by using a bus 1904.

The communication interface 1903 is configured to perform data transmission with another device. The memory 1902 stores computer program code. The computer program code includes computer instructions. When the computer instructions are executed by the processor 1901, the electronic device is enabled to perform the sidebar display method in embodiments of this application.

The processor 1901 may be a processor or a controller, such as a CPU, a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The processor may implement or execute various example logical blocks, modules, and circuits described with reference to content of this disclosure. Alternatively, the processor may be a combination of processors implementing a computing function, for example, a combination of one or more microprocessors, or a combination of the DSP and a microprocessor.

The bus 1904 may be a peripheral component interconnect (Peripheral Component Interconnect, PCI) bus, an extended industry standard architecture (Extended Industry Standard Architecture, EISA) bus, or the like. The bus 1904 may be classified into an address bus, a data bus, a control bus, and the like. For ease of representation, only one bold line is used to represent the bus in FIG. 19, but this does not mean that there is only one bus or only one type of bus.

An embodiment of this application further provides a computer-readable storage medium. The computer-readable storage medium includes computer instructions. When the computer instructions are run on an electronic device, the electronic device is enabled to perform related method steps in the foregoing method embodiments.

An embodiment of this application further provides a computer program product. When the computer program product runs on a computer, the computer is enabled to perform related method steps in the foregoing method embodiments.

The electronic device, the computer-readable storage medium, or the computer program product provided in this application is configured to perform the corresponding method provided above. Therefore, for beneficial effects that can be achieved by the electronic device, the computer-readable storage medium, or the computer program product, refer to the beneficial effects in the corresponding method provided above. Details are not described herein again.

The foregoing descriptions about implementations allow a person skilled in the art to clearly understand that for the purpose of convenient and brief description, division of the foregoing functional modules is used as an example for illustration. During actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located at one position, or may be distributed at different positions. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part making a contribution, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A sidebar display method, comprising:
in response to a first slide gesture, displaying a first interface element in a first state, wherein the first state indicates a state in which the first interface element changes from being small to being large;
in a process in which the first slide gesture continues to slide, displaying the first interface element and a second interface element, wherein the first interface element and the second interface element are in a state of being mutually independent; and
in response to an operation of ending the first slide gesture, stopping displaying the second interface element, and displaying a sidebar.

2. The method according to claim 1, wherein displaying the first interface element in the first state comprises: extending the first interface element from a first side edge of a screen.

3. The method according to claim 2, wherein a touch point of the first slide gesture on the screen slides from the first side edge of the screen in a first direction.

4. The method according to any one of claims 1 to 3, wherein before displaying the first interface element and the second interface element, the method further comprises:
displaying the first interface element and the second interface element that are in a second state, wherein the second state indicates that the first interface element is attached to the second interface element.

5. The method according to any one of claims 1 to 4, wherein in the process in which the first slide gesture continues to slide, a position of the second interface element moves following the touch point of the first slide gesture on the screen.

6. The method according to any one of claims 1 to 5, wherein after displaying the first interface element and the second interface element, the method further comprises:
if a distance between the second interface element and the first interface element does not reach a preset distance or before the second interface element is not detached from the first interface element, displaying the second interface element in a first display manner; and
if the distance between the second interface element and the first interface element reaches the preset distance, displaying the second interface element in a second display manner.

7. The method according to claim 6, wherein the method further comprises:
in the process in which the first slide gesture continues to slide, displaying an edge of the sidebar on the first side edge of the screen.

8. The method according to any one of claims 1 to 7, wherein the method further comprises: in the process in which the first slide gesture continues to slide, the first interface element gradually becomes small and disappears.

9. The method according to any one of claims 1 to 8, wherein the method further comprises: before the first slide gesture ends, displaying the second interface element in the second display manner.

10. The method according to any one of claims 1 to 9, wherein in the process in which the first slide gesture continues to slide, the method further comprises:
in a process in which the touch point of the first slide gesture on the screen slides from the screen in the first direction, updating the second interface element from the first display manner to the second display manner; and/or
in a process in which the touch point of the first slide gesture on the screen slides from the screen in a second direction, updating the second interface element from the second display manner to the first display manner.

11. The method according to any one of claims 1 to 10, wherein in the process in which the first slide gesture continues to slide, the method further comprises:
in the process in which the touch point of the first slide gesture on the screen slides from the screen in the first direction, displaying the first interface element and the second interface element that are in the second state; and
in the process in which the touch point of the first slide gesture on the screen slides from the screen in the second direction, displaying the first interface element in a third state, wherein the third state indicates a state in which the first interface element changes from being large to being small.

12. The method according to claim 6 or 7, wherein the first display manner comprises an arrow indicator, and the second display manner comprises a circular indicator.

13. The method according to any one of claims 1 to 12, wherein the first interface element is in a shape of an arc, and the second interface element is in a shape of a circle.

14. The method according to any one of claims 1 to 13, wherein the sidebar comprises a first area and a second area, the first area comprises at least one application icon, the at least one application icon in the first area comprises an icon that corresponds to a preset application and/or an icon that corresponds to an application recommended by a system, and the second area comprises an application icon of a locked application.

15. The method according to claim 14, wherein the method further comprises:
in response to an operation of expanding the sidebar by a user, displaying a first page, wherein the first page comprises at least one application icon; and
in response to an operation of selecting an application icon by the user, adding the application icon selected by the user to the second area.

16. An electronic device, comprising a memory and one or more processors, wherein the memory is coupled to the processor, the memory stores computer program code, the computer program code comprises computer instructions, and when the computer instructions are executed by the processor, the electronic device is enabled to perform the sidebar display method according to any one of claims 1 to 15.

17. A computer-readable storage medium, comprising computer instructions, wherein when the computer instructions are run on an electronic device, the electronic device is enabled to perform the sidebar display method according to any one of claims 1 to 15.

18. A computer program product, wherein when the computer program product runs on a computer, the computer is enabled to perform the sidebar display method according to any one of claims 1 to 15.
